# EUROPEAN PATENT APPLICATION

(11) **EP 3 711 906 A1**
(43) Date of publication of application: **23.09.2020**
(21) Application number: 18877652.0
(22) Date of filing: 21.08.2018
(51) Int. Cl.: B25J 5/00

(54) **INFORMATION PROCESSING DEVICE AND INFORMATION PROCESSING METHOD, COMPUTER PROGRAM, AND PROGRAM PRODUCTION METHOD**

(30) Priority: 16.11.2017 JP 2017221074
(71) Applicant: Sony Corporation, Tokyo 108-0075 (JP)
(72) Inventor: NAKAI, Mikio, Tokyo 108-0075 (JP); TORII, Kuniaki, Tokyo 108-0075 (JP); KODO, Yusuke, Tokyo 108-0075 (JP); SATO, Naoyuki, Tokyo 108-0075 (JP)
(74) Representative: MFG Patentanwälte Meyer-Wildhagen Meggle-Freund Gerhard PartG mbB
(86) International application number: PCT/JP2018/030869
(87) International publication number: WO 2019/097793

(57) **Abstract**

Provided is an information processing apparatus that is used to develop a control program of an autonomous operation apparatus including a movable portion or that assists the development.

An information processing apparatus that processes a control program of an apparatus to be controlled including a movable portion includes: a computation unit that computes an operation of the apparatus to be controlled according to the control program including a command value of each time period regarding the movable portion; and a holding unit that holds an ideal state of the apparatus to be controlled that operates according to the control program obtained as a computation result of the computation unit, in which the control program is output after adding the ideal state to the control program.

## Description

### [Technical Field]

The technique disclosed in the present specification relates to an information processing apparatus, an information processing method, a computer program, and a program manufacturing method that are used to develop a control program of an autonomous operation apparatus including a movable portion or that assist the development.

### [Background Art]

The progress of the robotics technology in recent years is remarkable, and the robotics technology is widely circulated in work sites of various industrial fields. A robot includes, for example, a plurality of links and joints for connecting the links. Furthermore, actuators, such as motors, for driving the joints are used to drive the joints to operate the robot.

For example, there is a known operation edit method of a robot or a character of animation using a key frame. Specifically, a data set including target values of the position (joint angle), the speed, and the like of each movable portion, such as a joint portion, in a key frame, such as at the start or at the end of the operation of a section, can be designated on a GUI (Graphical User Interface) screen to perform an edit of operation, such as "move the joint from Y degrees to Z in X seconds," that is intuitive and easy to understand.

Only the movement or control information of the actuator, such as each joint angle, is basically defined in motion data of the robot using the key frame or the like. In other words, information regarding the state caused by reproduction of the motion data on the real machine of the robot is not included in the motion data.

For example, a motion edit apparatus is proposed that reproduces the motion data on the real machine and feeds back, to the tool, the sensor information obtained as a result of the reproduction to thereby utilize the sensor information in correcting the motion data (for example, see PTL 1).

In addition, a robot apparatus is also proposed that detects external force based on a difference between a command value of each joint angle with respect to the real machine and an angle of an actual actuator (for example, see PTL 2).

### [Citation List]

### [Patent Literature]

[PTL 1]
   Japanese Patent Laid-Open No. 2004-148492
[PTL 2]
   Japanese Patent Laid-Open No. 2003-159674

### [Summary]

### [Technical Problems]

An object of the technique disclosed in the present specification is to provide an information processing apparatus, an information processing method, a computer program, and a program manufacturing method that are used to develop a control program of an autonomous operation apparatus including a movable portion or that assist the development.

### [Solution to Problems]

A first aspect of the technique disclosed in the present specification includes an information processing apparatus that processes a control program of an apparatus to be controlled including a movable portion, the information processing apparatus including:
a computation unit that computes an operation of the apparatus to be controlled according to the control program including a command value of each time period regarding the movable portion; and
a holding unit that holds an ideal state of the apparatus to be controlled that operates according to the control program obtained as a computation result of the computation unit, in which
the control program is output after adding the ideal state to the control program.

The ideal state includes a plurality of state parameters indicating a state of the apparatus to be controlled. In a case where the apparatus to be controlled is a movement apparatus that moves on a floor, the ideal state of the movement apparatus includes at least one of the state parameters including a posture or a tilt, a movement direction, a movement distance, or a movement speed of a body of the movement apparatus. In addition, the information processing apparatus further includes an input unit that receives an instruction for changing each state parameter in the ideal state of each time period, and the control program is output after adding, to the control program, the ideal state after correction of the state parameters according to the instruction received by the input unit.

In addition, a second aspect of the technique disclosed in the present specification provides an information processing apparatus that controls an apparatus to be controlled including a movable portion according to a control program, the information processing apparatus including:
a state acquisition unit that acquires a state of the apparatus to be controlled that operates according to a command value of each time period regarding the movable portion included in the control program; and
an evaluation unit that compares an actual state of the apparatus to be controlled acquired by the state acquisition unit with an ideal state added to the control program to evaluate the operation of the apparatus to be controlled or to evaluate the control program.

The state acquisition unit acquires the state of the apparatus to be controlled regarding each state parameter in the ideal state. Furthermore, the evaluation unit specifies the cause of the difference based on a result of the comparison of the actual state of the apparatus to be controlled and the ideal state regarding each state parameter. The information processing apparatus may further include a database that stores the difference between the actual state of the apparatus to be controlled and the ideal state regarding each state parameter in association with the cause of the difference, in which the evaluation unit refers to the database to specify the cause of the difference between the actual state of the apparatus to be controlled and the ideal state.

In addition, the information processing apparatus further includes a notification unit that notifies a user of a cause of the difference between the actual state of the apparatus to be controlled and the ideal state. The information processing apparatus further includes a database that stores the cause of the difference between the actual state of the apparatus to be controlled and the ideal state in association with content of notification to the user. Furthermore, the notification unit refers to the database and uses the content of notification stored in association with the cause specified by the evaluation unit to notify the user of the cause of the difference.

In addition, the notification unit controls the content of notification to the user, notification timing, or a notification frequency based on attribute information associated with the apparatus to be controlled. The attribute information associated with the apparatus to be controlled includes character, personality, nature, internal state or emotion, state of user, ambient environment, and the like associated with the apparatus to be controlled. The notification unit may include a plurality of modalities and select a modality to be used for the notification to the user based on the attribute information associated with the apparatus to be controlled.

In addition, a third aspect of the technique disclosed in the present specification provides an information processing method of controlling an apparatus to be controlled including a movable portion according to a control program, the information processing method including:
a state acquisition step of acquiring a state of the apparatus to be controlled that operates according to a command value of each time period regarding the movable portion included in the control program; and
an evaluation step of comparing an actual state of the apparatus to be controlled acquired in the state acquisition step with an ideal state added to the control program to evaluate the operation of the apparatus to be controlled or to evaluate the control program.

In addition, a fourth aspect of the technique disclosed in the present specification provides a computer program described in a computer-readable format to execute, on a computer, a process for controlling an apparatus to be controlled including a movable portion according to a control program, the computer program causing the computer to function as:
a state acquisition unit that acquires a state of the apparatus to be controlled that operates according to a command value of each time period regarding the movable portion included in the control program; and
an evaluation unit that compares an actual state of the apparatus to be controlled acquired by the state acquisition unit with an ideal state added to the control program to evaluate the operation of the apparatus to be controlled or to evaluate the control program.

The computer program according to the fourth aspect of the technique disclosed in the present specification defines a computer program described in a computer-readable format to realize a predetermined process on the computer. In other words, the computer program according to the fourth aspect of the technique disclosed in the present specification can be installed on the computer to attain cooperative action on the computer, and effects similar to the effects of the information processing apparatus according to the second aspect of the technique disclosed in the present specification can be obtained.

In addition, a fifth aspect of the technique disclosed in the present specification provides a program manufacturing method of manufacturing a control program of an apparatus to be controlled including a movable portion, the program manufacturing method including:
a computation step of computing an operation of the apparatus to be controlled according to the control program including a command value of each time period regarding the movable portion; and
a holding step of holding an ideal state of the apparatus to be controlled that operates according to the control program obtained as a computation result of the computation step, in which
the control program is output after adding the ideal state to the control program.

### [Advantageous Effects of Invention]

According to the technique disclosed in the present specification, the information processing apparatus, the information processing method, the computer program, and the program manufacturing method that are used to develop the control program of the autonomous operation apparatus including the movable portion or that assist the development can be provided.

Note that the advantageous effects described in the present specification are illustrative only, and the advantageous effects of the present invention are not limited to these. In addition, the present invention may also attain additional advantageous effects other than the advantageous effects described above.

Other objects, features, and advantages of the technique disclosed in the present specification will become apparent by more detailed description based on the embodiment described later and the attached drawings.

### [Brief Description of Drawings]

[FIG. 1]

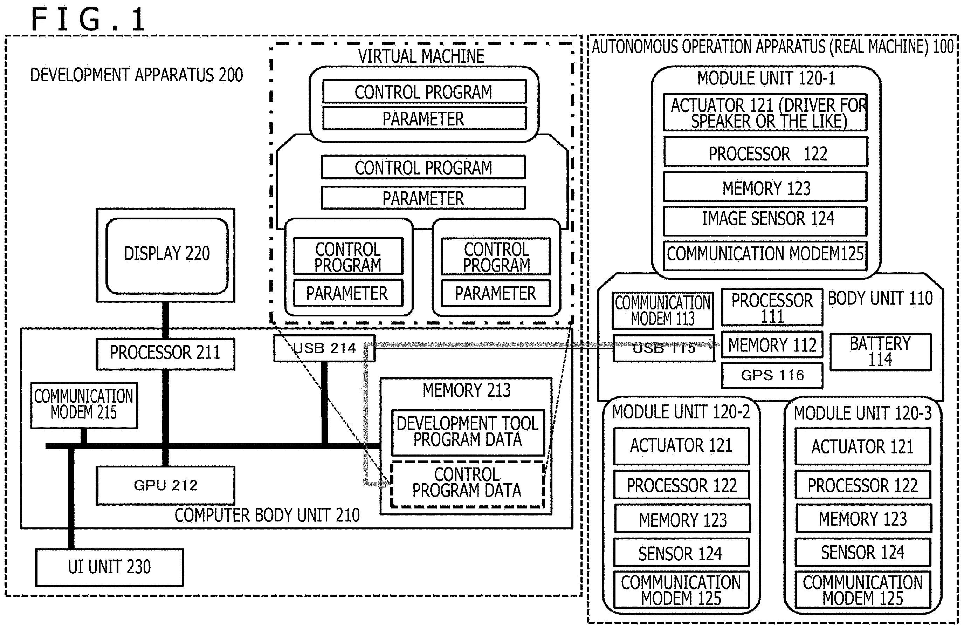

   FIG. 1 is a diagram schematically illustrating an example of a development environment of a control program.
[FIG. 2]

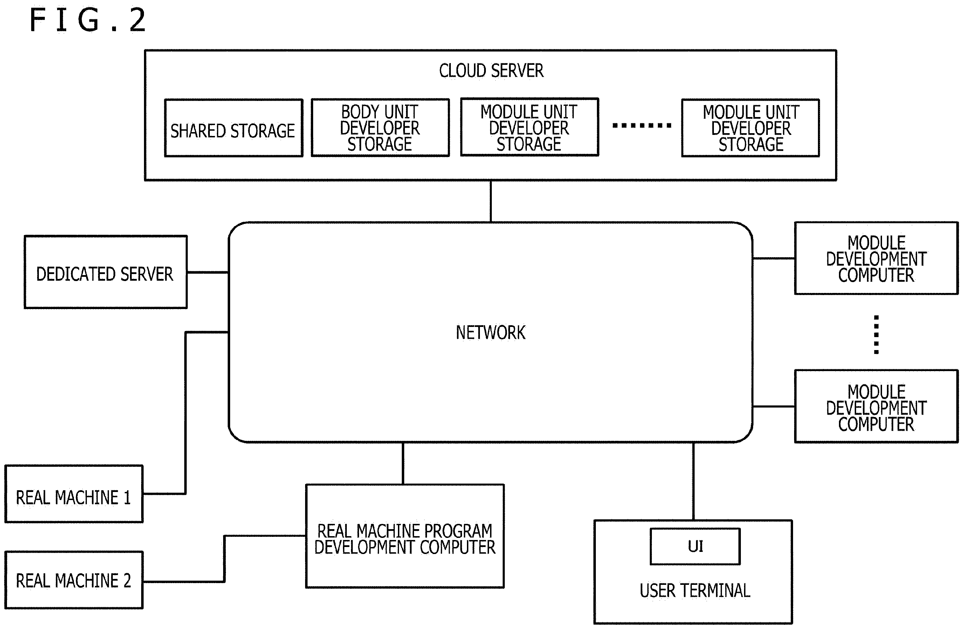

   FIG. 2 is a diagram illustrating a distributed development environment of the control program through a network.
[FIG. 3]

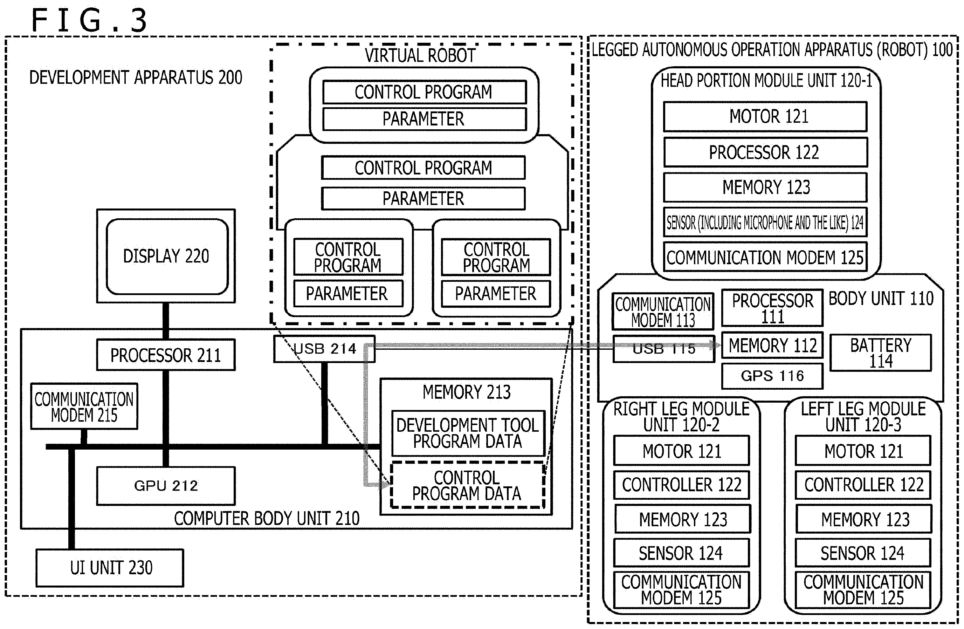

   FIG. 3 is a diagram illustrating a development environment of the control program with a robot as a development target.
[FIG. 4]

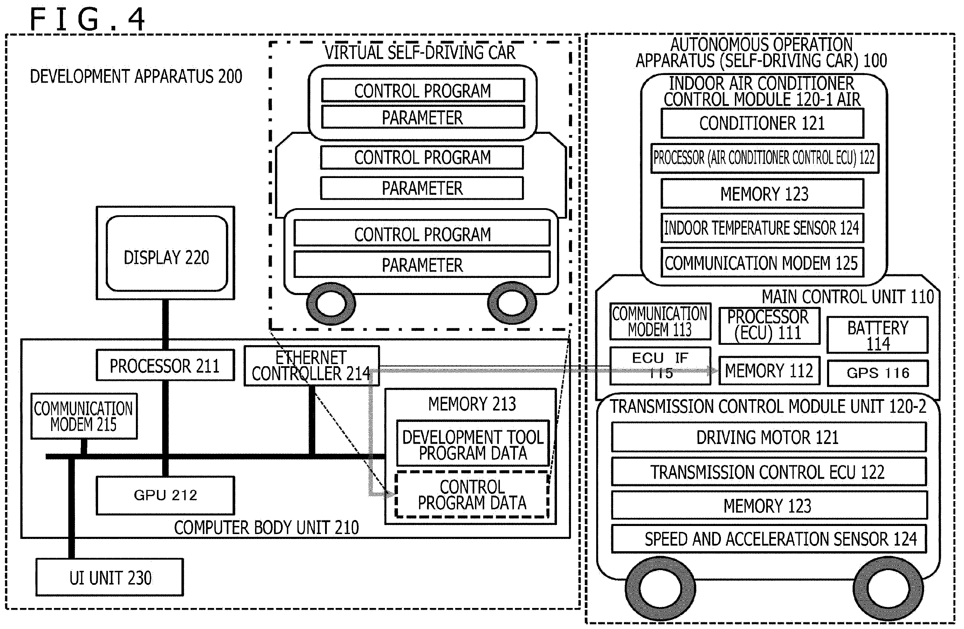

   FIG. 4 is a diagram illustrating a development environment of the control program with a self-driving car as the development target.
[FIG. 5]

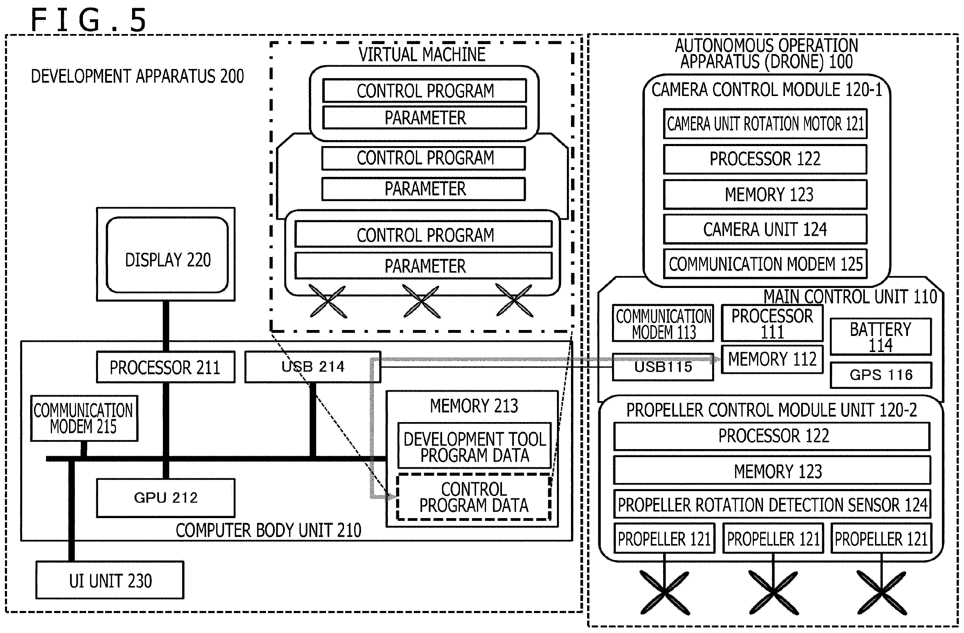

   FIG. 5 is a diagram illustrating a development environment of the control program with an unmanned aerial vehicle (drone) as the development target.
[FIG. 6]

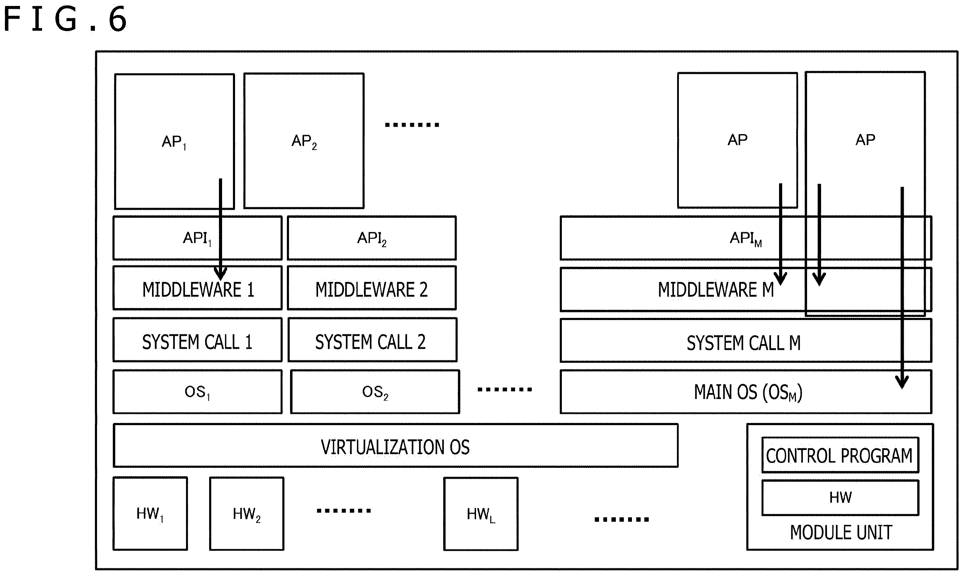

   FIG. 6 is a diagram illustrating a configuration example of architecture of hardware and software mounted on a real machine of an autonomous operation apparatus 100.
[FIG. 7]

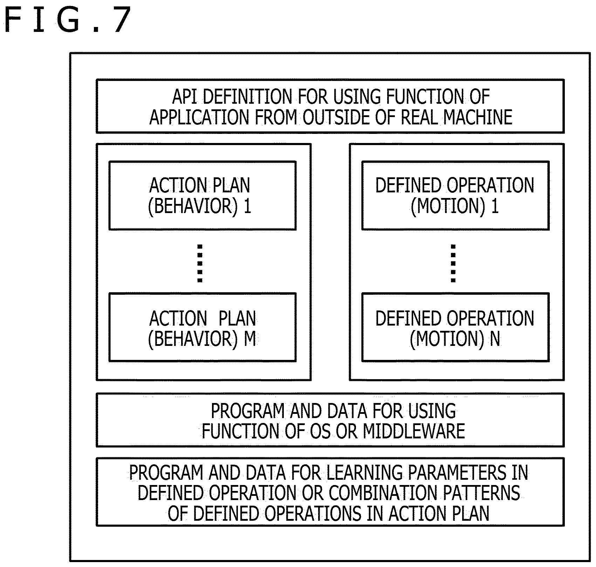

   FIG. 7 is a diagram schematically illustrating a configuration example of an application program.
[FIG. 8]

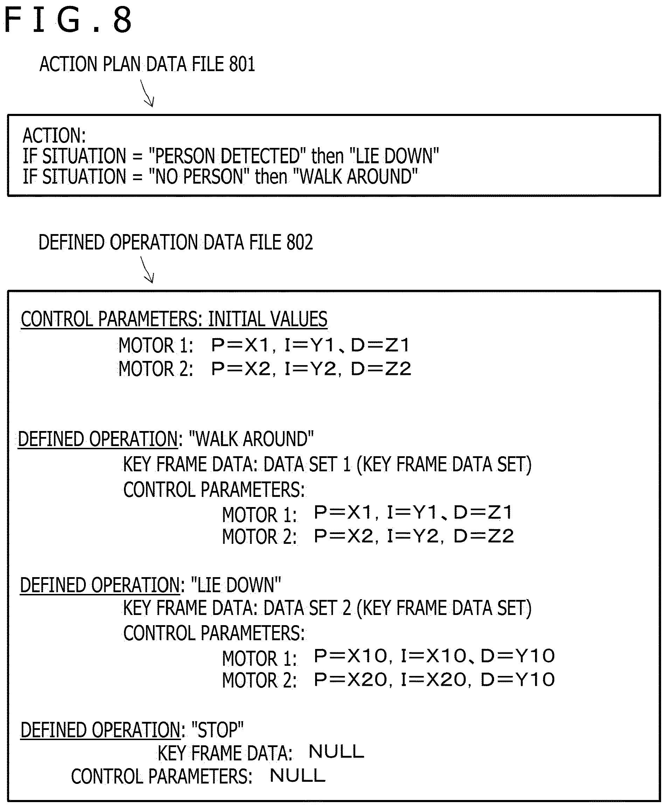

   FIG. 8 is a diagram schematically illustrating a configuration example of each data file of an action plan and a defined operation included in the application program.
[FIG. 9]

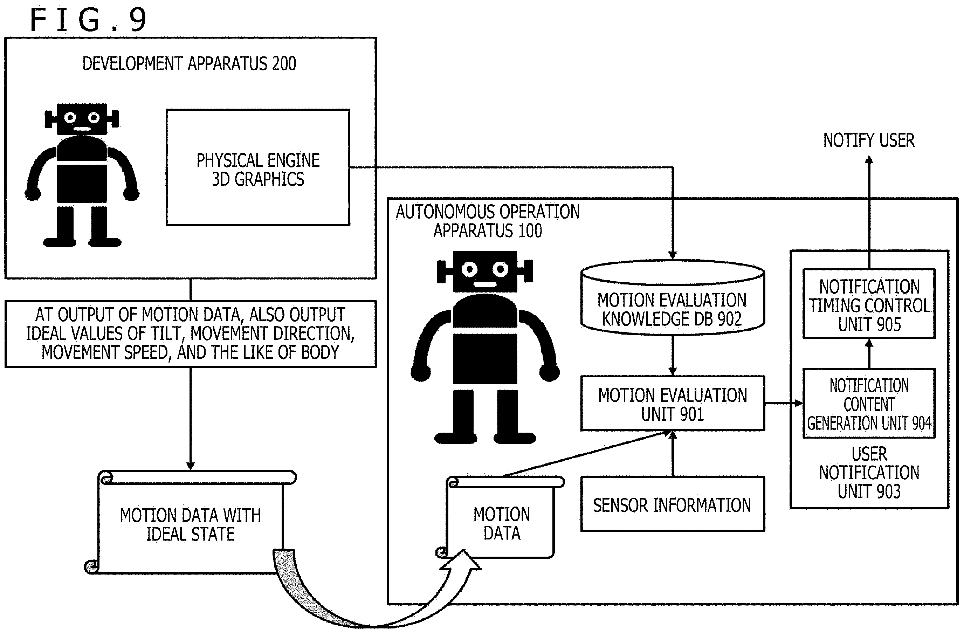

   FIG. 9 is a diagram schematically illustrating program development and an execution environment implementing a mechanism proposed in the present specification.
[FIG. 10]

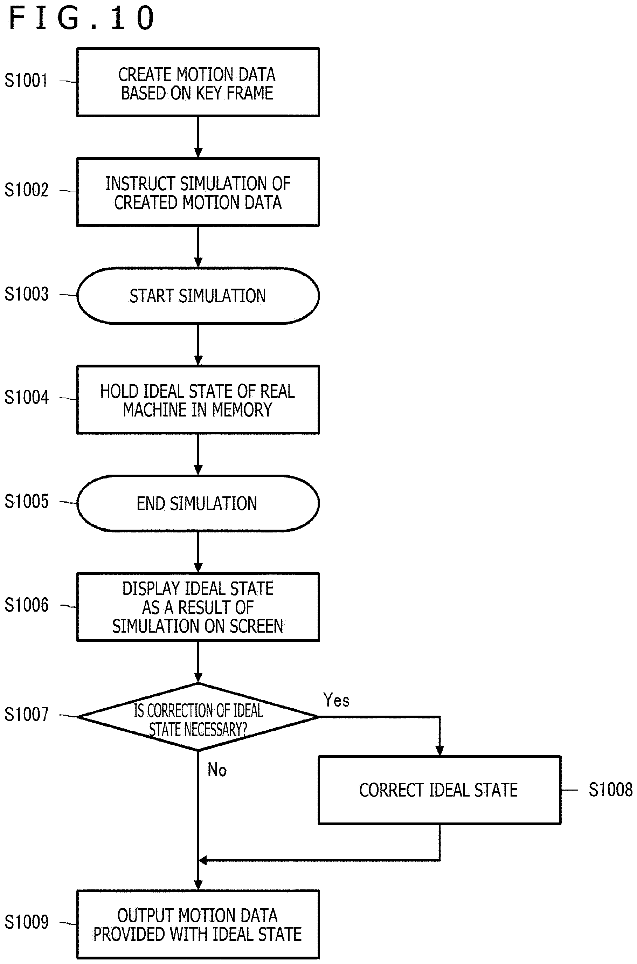

   FIG. 10 is a flow chart illustrating a procedure for creating motion data in the program development environment illustrated in FIG. 9.
[FIG. 11]

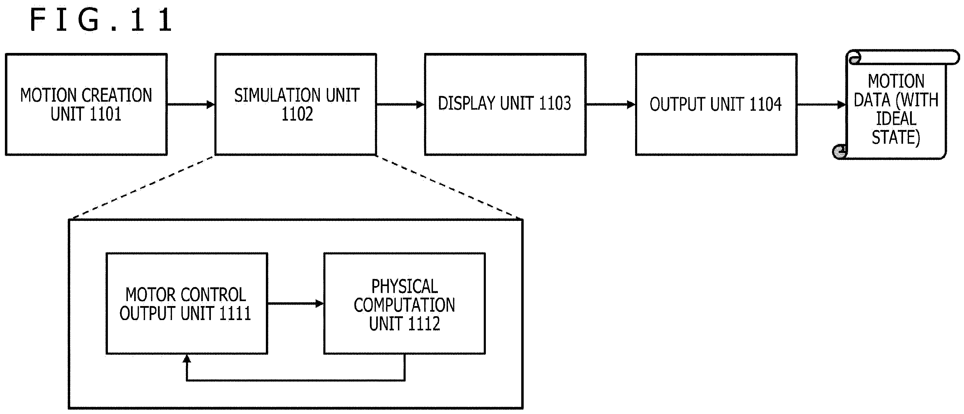

   FIG. 11 a diagram schematically illustrating a functional configuration example of a development apparatus 200 for editing the motion data provided with an ideal state.
[FIG. 12]

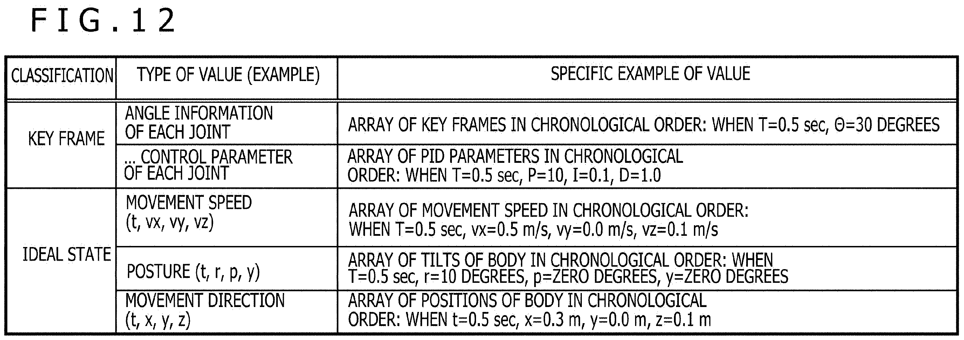

   FIG. 12 is a diagram schematically illustrating a configuration example of the motion data provided with the ideal state.
[FIG. 13]

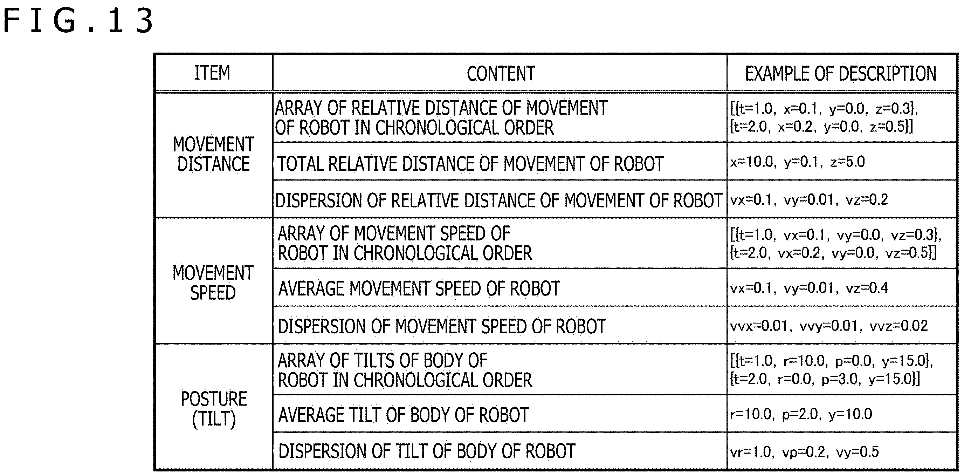

   FIG. 13 is a diagram illustrating a data configuration example of the ideal state (in a case where the autonomous operation apparatus 100 is a robot).
[FIG. 14]

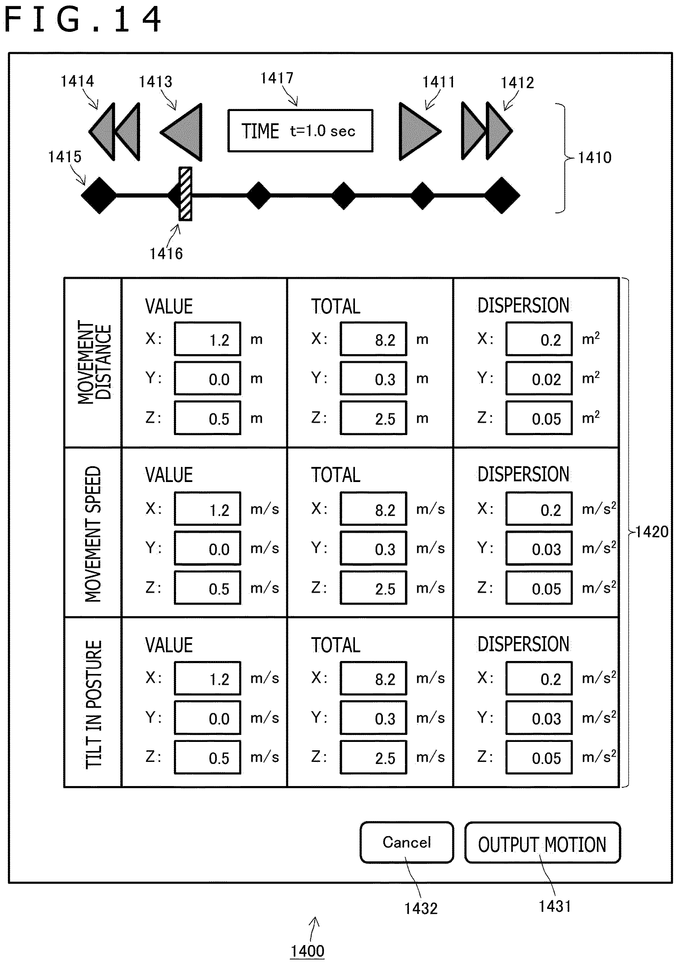

   FIG. 14 is a diagram illustrating a configuration example of an input screen for checking and correcting the ideal state.
[FIG. 15]

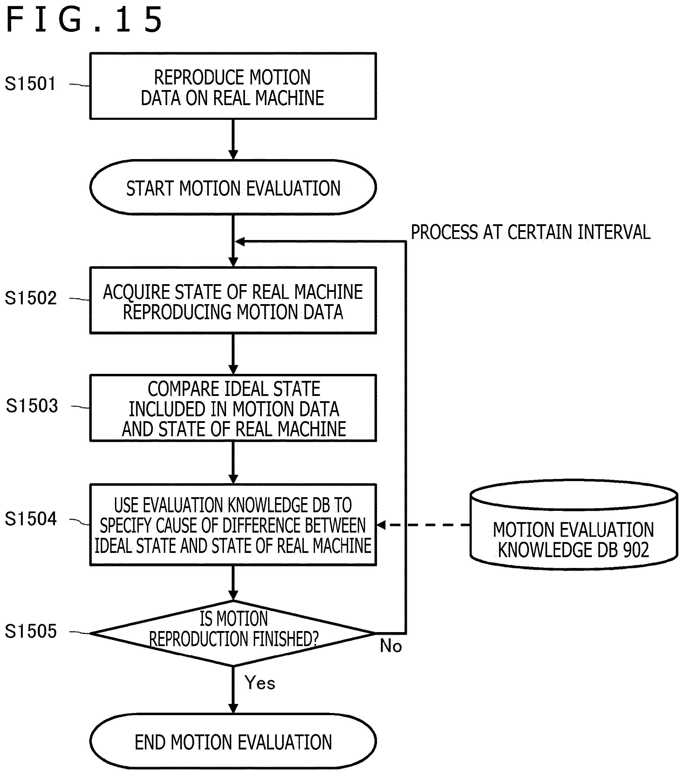

   FIG. 15 is a flow chart diagram illustrating a procedure for evaluating the motion data.
[FIG. 16]

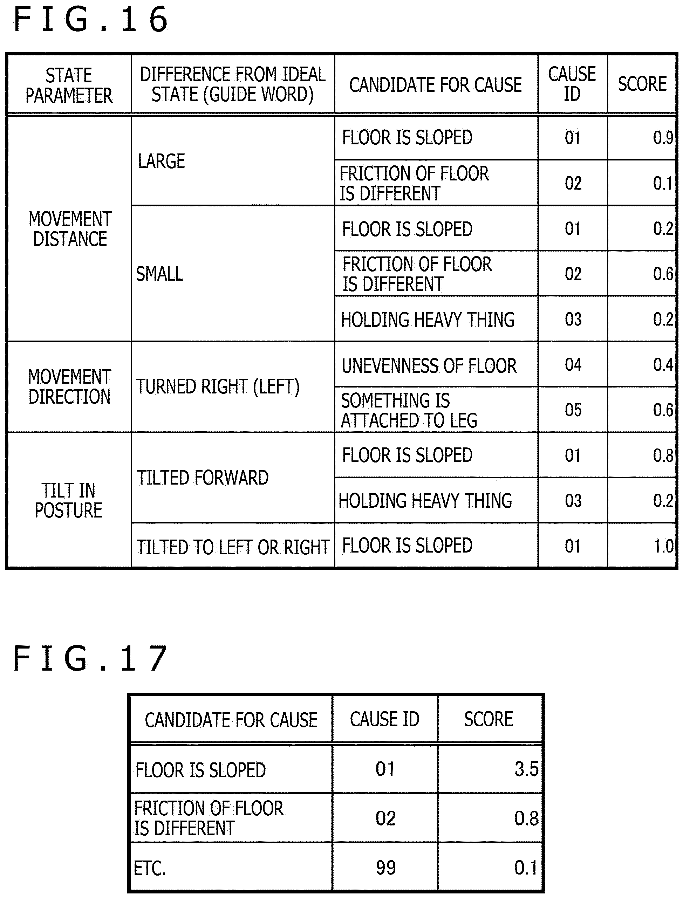

   FIG. 16 is a diagram illustrating a configuration example of data stored in a motion evaluation knowledge database 902.
[FIG. 17]
   FIG. 17 is a diagram illustrating a list of candidates for a cause obtained by motion evaluation.
[FIG. 18]

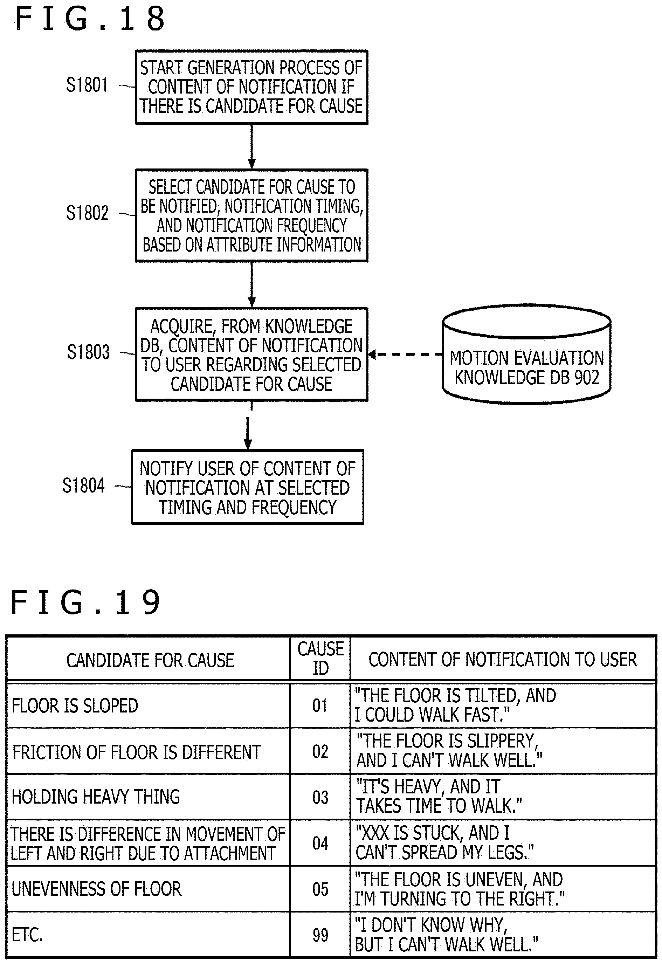

   FIG. 18 is a flow chart illustrating a procedure for notifying that a real-machine operation of the autonomous operation apparatus 100 is unexpected.
[FIG. 19]
   FIG. 19 is a diagram illustrating a configuration example of the data stored in the motion evaluation knowledge database 902.
[FIG. 20]

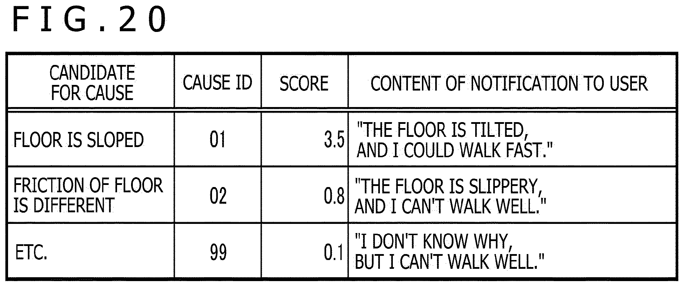

   FIG. 20 is a diagram illustrating an example of determining content of notification regarding the candidates for the cause.

### [Description of Embodiment]

Hereinafter, an embodiment of the technique disclosed in the present specification will be described in detail with reference to the drawings.

### A. Program Development Environment

FIG. 1 schematically illustrates an example of a development environment of a control program. An autonomous operation apparatus (real machine) 100 to be developed and a development apparatus 200 that creates the control program in the autonomous operation apparatus 100 are arranged in the development environment.

Here, the autonomous operation apparatus 100 is an apparatus that executes the control program developed in the development environment to control the action of the apparatus through autonomous or adaptive control. It is assumed that the autonomous operation apparatus 100 includes one or more movable portions and includes various modes, such as a robot, an unmanned aerial vehicle, and an autonomously running car, as described later.

The autonomous operation apparatus 100 includes: a body unit 110 that comprehensively controls the operation of the entire system 100; and a plurality of module units 120-1, 120-2, ···. Each module unit 120 includes a movable portion in which the drive is controlled by a control program. Although only three module units are depicted in FIG. 1 for the simplification, there can also be an autonomous operation apparatus including four or more module units or an autonomous operation apparatus including two or less module units.

One module unit 120 includes an actuator 121, a sensor 124, a processor 122, a memory 123, and a communication modem 125. Note that although not illustrated for the simplification, it is assumed that the components 121 to 125 in the module unit 120 are connected to each other through an internal bus.

The actuator 121 is, for example, a motor for rotating and driving the joint, a driver for a speaker, or the like. The sensor 124 is a sensor that detects an output state of the actuator, such as a joint rotation angle, angular velocity, and volume of speaker, a sensor that detects external force or other external environments, or the like.

The processor 122 controls the operation in the module, such as drive control (motor controller) of the actuator 121 and a recognition process of a detection signal from the sensor 124. The memory 123 is used by the processor 122 to store control information of the actuator, detection values of sensors, and the like.

The communication modem 125 is hardware for mutual communication between the module unit 120 and the body unit 110 or between the module unit 120 and another module unit, and the communication modem 125 may be a wireless modem or a wired modem. For example, the processor 122 receives a command signal for the drive of the actuator 121 or the like from the body unit 110 through the communication modem 125 or transmits detection data of the sensor 124 to the body unit 110 through the communication modem 125. In addition, the module unit 120 can also communicate with an external apparatus, such as a development apparatus 200, through the communication modem 125.

The body unit 110 includes a processor 111, a memory 112, a communication modem 113, a battery 114, a USB (Universal Serial Bus) port 115, and a GPS (Global Positioning System) 116. Note that although not illustrated for the simplification, the components 111 to 116 in the body unit 110 are connected to each other through an internal bus.

The processor 111 comprehensively controls the operation of the entire autonomous operation apparatus 100 according to a program stored in the memory 112. In addition, the battery 114 is a driving power source of the autonomous operation apparatus 100, and the battery 114 supplies a power source to the body unit 110 and each module unit 120.

The communication modem 113 is hardware for mutual communication between the body unit 120 and each module unit 120, and the communication modem 113 may be a wireless modem or a wired modem. For example, the processor 111 transmits a command signal for the drive of the actuator 121 or the like to each module unit 120 through the communication modem 113 or receives recognition results based on detection values of the sensor 124 in each module unit 120 through the communication modem 113. In addition, the body unit 110 can also communicate with another external apparatus, such as the development apparatus 200, through the communication modem 113.

The USB port 115 is used for connecting an external device to the body unit 110 by using a USB bus (cable). In the present embodiment, the USB port 115 can be used to connect the development apparatus 200 to the body unit 110. For example, a control program created on the development apparatus 200 can be installed on the autonomous operation apparatus 100 through the USB port 115. Note that the USB is an example of an interface standard for connecting an external apparatus to the autonomous operation apparatus 100, and the external apparatus may be connected according to another interface standard.

Note that although not illustrated, there is a data bus and a control bus for connecting the body unit 110 and hardware such as the module units 120-1, 120-2, ···.

The development apparatus 200 includes, for example, a personal computer, and the development apparatus 200 includes a computer body unit 210, a display 220 such as a liquid crystal panel, and a user interface (UI) unit 230 including a mouse, a keyboard, and the like. In addition, the computer body unit 210 includes a processor 211, a GPU (Graphic Processing Unit) 212, a memory 213, a USB port 214, and a communication modem 215. However, there can also be a configuration example in which the function of the GPU 212 is included in the processor 211. In addition, the computer body unit 210 includes hardware constituent elements other than the illustrated ones, and the components are connected to each other through a bus.

An operating system (OS) is operating on the development apparatus 200. The processor 211 can load a desired application program to the memory 212 to execute the application program in the execution environment provided by the OS.

In the present embodiment, a development tool program for creating a control program of the autonomous operation apparatus 100 is illustrated as an example of the application program. The development tool program is expanded on the memory 213 of the development apparatus 200 along with data necessary for executing the program.

The development tool program presents a GUI (Graphical User Interface) for program development on a screen of the display 220. The developer of the program can input data or a program through the user interface 230 while checking the content of the GUI screen. In addition, the development tool program has functions and the like for checking the operation of the control program using a compiler, a debugger, a simulation, and a 3D graphics animation regarding the created control program, and the developer can instruct the execution of the functions on the GUI screen.

The control program created by using the development tool program includes a control program executed on the processor 111 of the body unit 110 on the real machine of the autonomous operation apparatus 100, data such as parameters used by the control program, a control program for controlling the drive of the actuator 121 in the processor 124 of each module unit 120, and data such as parameters used by the control program. The parameters used by the control program include data such as control parameters of P (proportional control), I (integral control), D (differential control), and the like of the motor as an actuator. In the present specification, the program part and the data together may be referred to as a "control program."

The control program created by using the development tool program is stored in the memory 213. In addition, the control program on the memory 213 can be forwarded toward the autonomous operation apparatus 100 through the USB port 214. Alternatively, the control program on the memory 213 can be forwarded to the module unit 120 in the autonomous operation apparatus 100 through the communication modem 215.

In addition, the control program created by using the development tool program on the development apparatus 200 can verify the operation or modify the data and the program for control, by using a development tool program or data with a 3D graphics animation function (hereinafter, the program and the data for development tool together will also be referred to as a "development tool program"). In general, this type of development tool program has a function of generating a 3D graphics animation of the real-machine operation of the autonomous operation apparatus 100 according to the control program, and the developer can use the 3D graphics animation displayed on the display 220 to perform, in parallel, the verification of the operation of the control program developed by the developer and the correction of the data and the program.

In the present embodiment, it is assumed that the development tool program has a function called a physics engine. The physics engine is a computer program with a function of computing a physical phenomenon of the operation of the real autonomous operation apparatus 100 based on the laws of physics. The physical characteristics of the autonomous operation apparatus 100 and the real external environment are taken into account to generate an operation similar to the reality, and the result is displayed on the display 220. As opposed to the real machine of the autonomous operation apparatus 100, a virtual autonomous operation apparatus 100 that operates in the 3D graphics animation space by using the physics engine in place of the motor of the real machine or the like will also be referred to as a virtual machine (computer program and data including data for 3D graphics animation).

For example, if the autonomous operation apparatus 100 is a robot, the physics engine takes into account the weight and the moment of each link or joint of the arms of the robot, the characteristics of the actuators for driving the joints, and the like and calculates, based on the laws of physics, the physical action (such as connection to ground and collision with obstacle) of the virtual physical environment and the virtual machine expressed on the development tool program in the operation of the control program of the virtual machine modeled after the robot. In this way, the physics engine calculates the operation of the virtual machine as if the actuators of the robot are actually driven and displays, on the display 220, the 3D graphics animation of the real operation of the robot reproduced by the virtual machine.

The virtual machine is a control program and data configured to operate on the development tool program including the physics engine and the 3D graphics animation and is stored in the memory 213. Preferably, the control program and the data are modularized on the basis of operation in the processor of each module of the real machine. To operate the virtual machine on the 3D graphics space as if the virtual machine is a real machine, the control program of the virtual machine realizes, as part of the program, a function corresponding to the operation of the processor (for example, motor controller) 122 of each module unit 120 of the real machine. In addition, the control program of the virtual machine is programmed to use an API (Application Programming Interface) or a function to call a physics engine function for reproducing, in the 3D graphics animation, the operation corresponding to the actuator 121 (for example, motor) of each module unit 120 of the real machine. Furthermore, data (such as control parameters set in the actuators and the weight and the inertia of the links) used for the physical calculation in the physics engine is stored in the memory 213 together with the control program, and the data is read from the memory 213 along with the execution of the control program and used in the control program.

In addition, the API and the function for issuing an instruction to the program module to realize the physics engine function can be the same as the API and the function provided by the basic OS operating on the real machine side, that is, the autonomous operation apparatus 100 side, and the program created by the development tool program can be operated as it is by the OS on the real machine. Furthermore, the physics engine function can reproduce the actual physical phenomenon, and the program developed by using the development tool program can be uploaded to the autonomous operation apparatus 100 through the USB port 214 or the like and executed as it is. In this way, the operation checked by the development tool program can also be realized on the real machine.

In addition, the development tool program can also be used to develop the control program of the autonomous operation apparatus 100 by dividing the control program on the basis of module units. In this case, the control program can be similarly uploaded to the autonomous operation apparatus 100 on the basis of module units. For example, the developer in charge of the development of the hardware and the control program of only the module unit 120-1 can connect the development apparatus 200 of the developer to the corresponding module unit 120-1 of the autonomous operation apparatus 100 through the communication modem 215 to upload the created program and data to the memory 123 in the module unit 120-1. Similarly, the developer in charge of the development of the hardware and the control program of only another module unit 120-2 can connect the development apparatus 200 of the developer to the corresponding module unit 120-2 of the autonomous operation apparatus 100 through the communication modem 215 to upload the created program and data to the memory 123 in the module unit 120-1.

A plurality of developers or a plurality of development vendors can take charge of the development of the hardware and the program on the basis of module units, and the development of the entire autonomous operation apparatus 100 can be advanced in a distributed development environment.

FIG. 2 illustrates the distributed development environment of the control program through a network. In the distributed development environment illustrated in FIG. 2, the development is entrusted to individual developers or development vendors on the basis of modules. However, the module mentioned in FIG. 2 denotes a module of control software of the autonomous operation apparatus 100 in some cases in addition to the module unit as a hardware constituent element of the autonomous operation apparatus 100 illustrated in FIG. 1.

Each program developer entrusted with the development of the control program on the basis of body unit or module units of the autonomous operation apparatus 100 uses the module development computer to create a control program of the body unit or the module unit handled by the program developer. The development tool program described above is operated on the module development computer, for example. Each module development computer is connected to the network. Furthermore, each program developer may provide the control program and the like developed by the program developer in a shared storage on a cloud server, a storage dedicated to the program developer (that is, body unit developer storage, module unit developer storage), or a storage included in a dedicated server. In addition, the control program and the like may be shared by an administrator, a developer, a client, or a user having an account in a storage of a server or the like.

The developer taking charge or supervising the control program development of the entire real machine of the autonomous operation apparatus 100 is provided with the control program of the body unit and each module unit through the network. Specifically, the real machine program development computer used by the developer of the entire real machine directly communicates with the shared storage or the developer storage on the cloud server, the dedicated server, or the module development computer of each developer to receive each control program. Here, the network provided with the control program may be a wired or wireless network.

The real machine program development computer used by the developer of the entire real machine corresponds to the development apparatus 200 illustrated in FIG. 1 and has a function that allows to perform computation by using the physics engine on the development tool program to display the operation of the virtual machine corresponding to the real machine in the 3D graphics animation. Therefore, the real machine program development computer can use the physics engine function in which the development tool program includes the control programs of the body unit 110 and all of the module units 120 to check and verify the operation through the display of the 3D graphics animation of the virtual machine or the like.

Furthermore, each control program can be corrected on the real machine program development computer, in parallel with the execution of the developed control program. Therefore, the developer of the entire real machine and the developers handling the module units also efficiently perform cooperative development of the control program of the entire real machine. In addition, the control program corrected on the real machine program development computer can be provided again to the developer handling the module unit, and the developer can complete the final program product. For example, storages dedicated to the body unit and the module units can be arranged on the cloud server to manage the control programs on the basis of module units to thereby smoothly advance the cooperative development.

The control program in which the operation is checked and verified (that is, completed) on the real machine program development computer used by the developer of the entire real machine can be directly uploaded from the development apparatus 200 to the autonomous operation apparatus 100 of the real machine through the USB port 214. Alternatively, the control program of the entire real machine or each module unit can also be uploaded to the real machine through a wired or wireless network.

In addition, there can also be a mode of uploading the control program from the dedicated server to the real machine. For example, the user of a real machine may use the account of the user to log in to the dedicated server through the user interface (such as keyboard, mouse, and touch panel) of the user terminal of the user and may further select the control program to be downloaded from or uploaded to the real machine to carry out the download or the upload.

### A-1. Program Development Environment for Robot

FIG. 3 illustrates a development environment of the control program in a case where a legged robot is to be developed as a specific example of the autonomous operation apparatus 100. Although a single development apparatus 200 is used to develop the program in FIG. 3, it is obvious that the distributed development environment through the network as illustrated in FIG. 2 can also be used.

The legged robot 100 illustrated in FIG. 3 includes the body unit 110 and the plurality of module units 120-1, 102-2, ··· corresponding to a head portion and left and right leg portions. Each of the module units 120-1, 102-2, ··· includes a movable portion in which the drive is controlled by the control program. Although not illustrated, there are a data bus and a control bus for connecting hardware, such as the body unit 110 and the module units 120-1, 102-2, ··· and the like of the head portion, the left and right leg portions, and the like.

Note that the legged robot 100 may further include module units of an upper limb and the like not illustrated. In addition, there can also be a modification of the real machine configuration in which the functions of the processors, the memories, and the like in at least part of the module units are integrated with the body unit 110 and controlled by the processor 111 of the body unit 110.

The body unit 110 includes the processor 111, the memory 112, the wireless or wired communication modem 113, the battery 114, the USB port 115, and the GPS 116.

The module units 120-2 and 120-3 of the left and right legs include, as the actuators 121, motors for driving joints (or for walking), such as hip joints, knee joints, and angles, and each of the module units 120-2 and 120-3 includes, as the processor 122, a motor controller that controls the drive of the motor. In addition, each of the module units 120-2 and 120-3 includes, as the sensor 124, a torque sensor that detects external force generated on the output side of the motor, an encoder that detects the rotation angle on the output side of the motor, a grounding sensor of a sole portion, and the like. In addition, the module unit 120-1 of the head portion includes, as the actuator 121, a motor for rotating the head portion and includes, as the sensor 124, an image sensor that images the surroundings.

As in FIG. 1, the development tool program operated on the development apparatus 200 can be used to create the control programs of the body unit 110 and the module units 120 of the robot 100, and the computation of the physics engine operated on the development tool program can be further used to check and verify the operation through the display of the 3D graphics animation of the virtual machine or the like.

In addition, the control program created by using the development apparatus 200 or the control program of the entire real machine 100 and the control program of each module unit 120 developed in the development environment as illustrated in FIG. 2 (or in other development environments) are uploaded to the memory 112 of the body unit 110 or the memory 123 of each of the module units 120-1, 102-2, ··· in wired or wireless communication through the USB port 115 of the body unit 110 or the communication modem 125 of each module unit 120. Furthermore, the uploaded program is appropriately operated at the start of the robot 100 or the like.

### A-2. Program Development Environment for Self-Driving Car

FIG. 4 illustrates a development environment of the control program in a case where a self-driving car is to be developed as another specific example of the autonomous operation apparatus 100. Although the self-driving car 100 is a car in which an automatic driving technique is implemented (or an unmanned driving vehicle for work, for transport, or the like), it is assumed that the self-drive car 100 includes a complete automatic driving vehicle as well as a car running in an automatic driving mode in a car in which an automatic driving mode and a manual driving mode can be switched and a car running in a drive assistance mode in which part of the operation, such as steering and acceleration/deceleration, is automated. Although a single development apparatus 200 is used to develop the program in FIG. 4, it is obvious that the distributed development environment through the network as illustrated in FIG. 2 can also be used.

The self-driving car 100 illustrated in FIG. 4 includes a main control unit 110 as well as a transmission control module unit 120-2 and an indoor air conditioner control module unit 120-1 as module units including movable portions. Although not illustrated, there are a data bus and a control bus (such as CAN (Controller Area Network) bus) for connecting hardware of the main control unit 110, the module units 120, and the like. In addition, although the self-driving car usually includes a large number of module units not illustrated other than the transmission control module unit 120-2 and the indoor air conditioner control module unit 120-1, the module units are not illustrated for the simplification of description.

The main control unit 110 includes an ECU (Electronic Control Unit) as the processor 111, the memory 112, the communication modem 113, an ECU interface 115, the GPS 116, and the battery 114. The communication modem 113 can be for Wi-Fi (Wireless Fidelity), LTE (Long Term Evolution), near field communication, or the like. In addition, the ECU interface 115 can be an interface for a CAN bus. In addition, a communication standard, such as Ethernet (registered trademark), is used for the connection to the development apparatus 200 side, and the developed control program is uploaded.

The indoor air conditioner module unit 120-1 includes an air conditioner as the actuator 121, an air conditioner control ECU as the processor, the memory 123, an indoor temperature sensor as the sensor 124, and the communication modem 125 of Bluetooth (registered trademark) communication or the like. For example, the Bluetooth (registered trademark) communication can be used to connect to an information terminal, such as a smartphone, carried by an occupant to control the air conditioner.

The transmission control module unit 120-2 includes a driving wheel motor as the actuator 121, a transmission control ECU as the processor 122, the memory 123, as well as a speed and acceleration sensor, a steering angle sensor, and the like as the sensor 124.

Note that although the ECU is arranged on the main control unit 110 and each module unit 120 in the configuration example illustrated in FIG. 4, the ECU 111 in the main control unit 110 may be configured to perform centralized management of all of the module units.

As in FIG. 1, the development tool program operated on the development apparatus 200 can be used to create the control programs of the main control unit 110, the indoor air conditioner control module unit 120-1, and the transmission control module unit 120-2 of the self-driving car, and the computation of the physics engine operated on the development tool program can be further used to check and verify the operation through the display of the 3D graphics animation of the virtual machine or the like.

In addition, the control program created by using the development apparatus 200 as well as the control program of the entire real machine 100 and the control program of each module unit 120 developed in the development environment as illustrated in FIG. 2 (or in other development environments) are uploaded to the memory 112 of the main control unit 110 or the memory 123 of each module unit 120 in wired or wireless communication through the ECU interface 115 of the main control unit 110 or the communication modem of each module unit 120. Furthermore, the uploaded program is appropriately operated at the start of the self-driving car 100 or the like.

### A-3. Program Development Environment for Unmanned Aerial Vehicle

FIG. 5 illustrates a development environment of the control program in a case where an unmanned aerial vehicle (drone) is to be developed as another specific example of the autonomous operation apparatus 100. Although a single development apparatus 200 is used to develop the program in FIG. 5, it is obvious that the distributed development environment through the network as illustrated in FIG. 2 can also be used.

The unmanned aerial vehicle 100 illustrated in FIG. 5 includes the main control unit 110 as well as a camera control module unit 120-1 and a propeller control module unit 120-2 as module units including movable portions. Although not illustrated, there are a data bus and a control bus for connecting hardware of the main control unit 110, each module unit 120, and the like. In addition, module units other than the camera control module unit 120-1 and the propeller control module unit 120-2 may be incorporated into the wireless aerial vehicle 100.

The main control unit 110 includes the processor 111, the memory 112, the communication modem 113, the USB port 115, the GPS 116, and the battery 114. The communication modem 113 can be a wireless modem for Wi-Fi, LTE, near field communication, or the like, and the communication modem 113 is configured to communicate with a remote controller operated by an operator. In addition, the USB port 115 is used for the connection to the development apparatus 200 side, and the developed control program is uploaded.

The camera control module unit 120-1 includes a camera unit (including image sensor) as the sensor 124, a camera unit rotation motor as the actuator 121, a motor controller as the processor 122, the memory 123, and the communication modem 125. The camera unit rotation motor 121 can rotate in a range of, for example, 360 degrees in the horizontal direction and may also be capable of tilt rotation. In addition, the communication modem 125 can be a wireless modem for Wi-Fi, LTE, near field communication, or the like, and the rotation or imaging of the camera unit is performed according to a command from a remote controller or a smartphone operated by the operator.

The propeller control module unit 120-2 includes, for example, three propellers (including rotation motors) as the actuator 121, the processor 122 that performs control or the like of the rotation motors of the propellers, the memory 123, and a propeller rotation detection sensor as the sensor 124.

As in FIG. 1, the development tool program operated on the development apparatus 200 can be used to create the control programs of the main control unit 110, the camera control module unit 120-1, and the propeller control module unit 120-2 of the unmanned aerial vehicle 100, and the computation of the physics engine operated on the development tool program can be further used to check and verify the operation through the display of the 3D graphics animation of the virtual machine or the like.

In addition, the control program created by using the development apparatus 200 as well as the control program of the entire real machine 100 and the control program of each module unit 120 developed in the development environment as illustrated in FIG. 2 (or in other development environments) are uploaded to the memory 112 of the main control unit 110 or the memory 123 of each module unit 120 in wired or wireless communication through the communication modem 113 or the like of the main control unit 111 or each module unit 120. Furthermore, the uploaded program is appropriately operated at the start of the unmanned aerial vehicle 100 or the like.

### B. Architecture of Hardware and Software

FIG. 6 illustrates a configuration example of architecture of hardware and software mounted on the real machine of the autonomous operation apparatus 100.

The real machine includes, as also illustrated in FIG. 1 and FIGS. 3 to 5, the body unit (or main control unit) and a plurality of hardware modules (HW1, HW2, ···, HWL), such as a plurality of module units including movable portions, incorporated into the housing. In addition, there can also be a real machine in which each hardware module is dispersed and arranged in two or more housings.

The OS directly controls the hardware modules (HW₁, HW₂, ··· HWL). In addition, there is also a case in which, instead of the OS, the control program uploaded to the memory in the hardware module directly controls the hardware module and the like (specifically, the processor executes the control program loaded to the memory to control the drive of the actuator).

As illustrated in FIG. 1 and FIGS. 3 to 5, in the autonomous operation apparatus 100 in which the hardware architecture includes the body unit 110 and the plurality of module units 120-1, 120-2, ···, the main OS that controls the entire system 100 operates in the body unit 110 (or the processor 111 in the body unit 110) to directly or indirectly control the control program executed in each of the module units 120-1, 120-2, ···.

FIG. 6 illustrates an example in which a plurality of sub OSs (for example, OS₁, OS₂, ···) operate in addition to the main OS, and each OS provides the execution environment of the application program. In a case where, for example, the OS₁ is to drive the hardware module under the management of the main OS in FIG. 6, the OS1 can first communicate with the main OS to indirectly control the control program of a desired module unit. In addition, an interprocess communication technique, such as RPC (Remote Procedure Call), can be used to realize the communication between the OS₁ and the main OS.

In addition, FIG. 6 also illustrates architecture constructed by using a virtualization technique (Virtualization). That is, a plurality of different operating systems (for example, OS₁, OS₂, ··· and part of main OS) are operated on a virtualization OS. The application programs developed by assuming that there are different OSs (for example, AP₁ developed by assuming that there is OS₁, and AP₂ developed by assuming that there is OS₂) can coexist on the same real machine.

At least some of the application programs (AP) in FIG. 6 correspond to the control programs developed in the development environment as illustrated in FIG. 1 and FIGS. 3 to 5.

For example, the application programs developed in the self-driving car 100 illustrated in FIG. 4 can be roughly classified into two types including application programs that require high reliability as in drive system control (DSU (Driver Sensing Unit) or the like) and application programs with high versatility as in infotainment (such as audio device and air conditioner) regarding a service for the user. The former AP₁ that requires high reliability is developed by assuming that there is the OS₁ with higher reliability, and the latter AP₂ with high versatility is developed by assuming that there is the OS₂ with higher versatility that can be developed by many developers. The drive system control application program AP₁ and the infotainment application program AP₂ developed in this way by assuming that there are different OSs can coexist on the same autonomous operation apparatus (such as self-driving car) because the involvement of the virtualization OSs facilitates the control of the hardware corresponding to each program.

The developer of the application program can use the API provided by the system (for example, middleware) to develop the application program. Examples of the functions of the API that can be used include "display of map," "switch to speech dialogue mode," and "recognition of person nearby." In the example illustrated in FIG. 6, API₁ provided by middleware 1, API₂ provided by middleware 2, ···, and API_{M} provided by middleware M can be used to develop the application program.

In addition, the developer of the application program can develop the application program by including a program for using a system call to instruct the OS. The system call here denotes an interface for using a function regarding the system control. Examples of the system call include changing parameters of the processor 122 (for example, motor controller) in the module unit 120 and setting a network address in the communication modem. In the example illustrated in FIG. 6, the application program can be developed by including a program of using a system call 1 for instructing the OS₁, a system call 2 for instructing the OS₂, and a system call M for instructing OSM.

FIG. 7 schematically illustrates a configuration example of the application program. The illustrated application program corresponds to a control program for controlling the autonomous operation apparatus, and the program is developed in, for example, the development environment illustrated in FIG. 1 or FIGS. 3 to 5 (that is, by using the development tool program on the development apparatus 200) .

The application program includes one or more defined operations and one or more action plans. Both of the defined operations and the action plans are control programs of the autonomous operation apparatus 100.

The defined operation includes a target value for instructing the controller of the actuator represented by a motor or the like in the hardware, and the defined operation is also called "motion" or "motion data." There is a case in which one defined operation includes only a target value for instructing the controller at a certain time, and there is a case in which one defined operation includes a series of target values for instructing the controller in chronological order in a certain section. As described later, it is assumed in the present embodiment that a key frame (described later) is used to create the defined operation.

In addition, the defined operation also includes a program and data for instructing the controller to set basic parameters. Examples of the basic parameters include P (proportional control), I (integral control), and D (differential control) (for example, see Japanese Patent Application No. 2017-70634 already assigned to the present applicant). In addition, other parameters that can be set in the controller (processor) based on the characteristics of the actuator, such as a motor, to be controlled can be set as basic parameters in the defined operation.

The action plan includes a program and data for calling functions of one or more defined operations. The autonomous operation apparatus 100, such as a robot, reproduces one or more defined operations called according to the action plan to realize one "behavior."

In addition, the action plan includes a program and data for deciding the defined operation to be started in each situation to thereby describe a series of operations of the autonomous operation apparatus 100. For example, there can be an action plan in a format of tree structure which describes conditional branches for selecting the defined operation. The action plan controls the autonomous operation apparatus 100 based on a recognition result, and therefore, the action plan can be positioned as an action control program based on environment (situation) recognition. In this regard, the action plan also corresponds to part of a function of AI (artificial intelligence) in a broad sense.

The application program can also include a program and data for using the function of the OS or the middleware.

The application program further defines an API for using the application function of the real machine of the autonomous operation apparatus 100 from the outside. Therefore, the development apparatus 200 used to create the application program or an external apparatus, such as a user terminal and a server, can call the API through communication during operation or test operation of the real machine to thereby use the function of the application program.

In addition, the application program can also include a program and data for changing the program and the data of the action plan or the defined operation by learning during real-machine operation.

Note that as illustrated in FIG. 7, the application program includes a plurality of components. All of the components may be integrated to provide one file, or each component may be provided as a separate file. In addition, the files may be stored in the shared storage on the cloud server, the storage dedicated to each developer (that is, body unit developer storage, module unit developer storage), the storage included in the dedicated server, or the like in FIG. 2, and the administrator, the developer, the client, or the user having the right to access the storage of the server or the like may be able to share the files.

FIG. 8 schematically illustrates a configuration example of each data file of the action plan and the defined operation included in the application program. In figure 8, for the convenience of description, the data in the file is described in a format of natural language independent of a specific program language. However, those skilled in the art can easily understand that a kind of program language can be used to code the data file as illustrated in FIG. 8.

A data file 801 of the action plan is a set of data describing the conditional branches for selecting the defined operation in a format of tree structure. In the example illustrated in FIG. 8, the conditions for selecting the defined operation are described in a format of IF statement (IF situation = "person detected" then "lie down," IF situation = "no person" then "walk around"). Note that although FIG. 8 illustrates the data file 801 of the action plan including simple IF statements for the convenience of description, the data file 801 may include complicated conditional statements including a nested structure or the like.

A data file 802 of the defined operation includes a data set of a plurality of defined operations used in the action plan 801 and includes initial values of the control parameters of each hardware component.

In the example illustrated in FIG. 8, the defined operation data file 802 includes PID parameter values for motor 1 (P=X1, I=Y1, D=Z1) and PID parameter values for motor 2 (P=X2, I=Y2, D=Z2) that are initial values of the control parameters.

Furthermore, in the example illustrated in FIG. 8, the defined operation data file 802 includes data of defined operations of "walk around," "lie down," and "stop." The data of each defined operation includes a data set of a key frame and control parameters of each hardware component (for example, PID parameters to be set in the motor controller).

The key frame includes data of target values to be set in each of the module units 120-1, 120-2, ··· (for example, target values of rotation position, rotation angle, and the like with respect to the motor as the actuator 121). One defined operation includes a data set of one or a plurality of key frames. In addition, the control parameters designated in the defined operation are control parameters to be set in the defined operation. In addition, the key frame data and the controller characteristic data of the defined operation of "stop" are both NULL. NULL may be the initial value.

The developer of the application program can use the development tool program on the development apparatus 200 to create the application program as described above. The development tool program has functions of 3D graphics animation and the like in collaboration with the compiler, the debugger, and the physics engines, and the developer of the application program can instruct execution of the functions on the GUI screen.

It is assumed in the present embodiment that the development tool program used to develop the application program has a function called a physics engine. The physics engine is a function of reproducing, on the computer, the phenomenon based on the laws of physics regarding the operation of the real autonomous operation apparatus 100. The physics engine can be used to carry out the simulation of the application program for controlling the real-machine operation of the autonomous operation apparatus 100 to thereby reproduce the real-machine operation in a virtual machine while taking into account the physical characteristics of the autonomous operation apparatus 100 and the real external environment. Recently, the accuracy of the physics engine is improving, and the simulation using the physics engine can accurately reproduce, on the virtual machine, the operation of the real machine that executes the application program.

In addition, the development tool program can combine the physics engine with the function of the 3D graphics animation to thereby generate the 3D graphics animation representing the operation similar to the real machine and display the result. The developer of the application program can verify the operation of the real machine while viewing the 3D graphics animation and can further appropriately correct the application program. Particularly, the physics engine that performs high-level physical computation plays a role corresponding to the hardware (for example, motor controller) of the real machine, and the control program can be verified without using the real machine. This improves the efficiency of development and reduces the development cost. In addition, it is expected to reproduce an expected operation on the real machine when the application program including the control program created in this way is operated on the real machine.

Therefore, in the development process of the control program, optimal control parameters to be designated in each defined operation can be derived based on the computation result of the physics engine, the display result of the 3D graphics animation, and the like in the development process of the control program of the defined operation or the like. According to the data configuration example illustrated in FIG. 8, the developer of the program and the like, such as the developer of the program, can describe, in the defined operation, the optimal control parameters of each defined operation.

### C. Proposal Regarding Development Environment and Execution Environment of Program

Although the movement and the control parameters, such as joint angles, of the movable portions of the autonomous operation apparatuses are defined in the motion data using the key frame and the like (for example, see FIG. 8), the motion data does not include information regarding the state of the real machine (or part of the module units included in the real machine) caused by the reproduction of the motion data.

Therefore, whether or not the movable portions (joint angles) move as expected may be observed when the control program is executed on the real machine. However, in a case where the movement of the movable portions is not as expected, it is difficult to make a higher-level determination of the real-machine operation, such as the type of deviation in behavior of the real machine as a whole and the cause of the deviation in behavior.

For example, it is assumed that a motion of "move forward" on the real machine of a legged robot is reproduced in an environment with a very slippery road surface (low coefficient of friction), and the expected real-machine operation is not realized. An expert, such as the designer of the legged robot and the developer of the control program, may be able to figure out the cause of the unexpected operation of the real machine. However, a general user may not even recognize the fact that the real machine has reproduced the motion aimed at "move forward," and the general user may fall into a situation where the general user does not understand what is wrong (that is, the cause of the unexpected real-machine operation). Even if the user understands the type of operation of the real machine, professional knowledge is necessary to identify the cause of the unexpected real-machine operation (for example, the cause of the unexpected operation as a result of the reproduction of the motion "move forward" is the friction of the floor). It is significantly difficult for a general user who lacks the professional knowledge to identify the cause of the expected operation of the real machine and further voluntarily perform appropriate treatment.

In a case of a robot for industrial use, a robot suitable for a specific work site can be created, or a work environment suitable for operating the implemented robot can be provided. On the other hand, a robot for general household, such as an entertainment robot, is expected to operate in various environments. Therefore, when the real machine is operated in an unexpected environment, there may often be a situation where the programmer or the like cannot realize the intended real-machine operation. It is significantly difficult for the user of general household who lacks the professional knowledge to recognize the unexpected real-machine operation and to involuntarily perform appropriate treatment by identifying the cause.

Therefore, it is important that the autonomous operation apparatus that executes the control program analyze the real-machine operation and identify the cause when the operation is unexpected, thereby involuntarily notifying the user of the cause and the appropriate treatment.

Furthermore, human-like personality is provided in the case of the entertainment robot, and it is important that most of the interface with the user (such as conversation and gesture) be based on the personality in order for the user to recognize the personality. If this type of robot issues a notification to the user in a stereotype mechanical mode without thinking or mental process, the character and the personality of the robot are significantly lost, and the impression of the robot the user has may be ruined. Therefore, the autonomous operation apparatus, such as the entertainment robot, needs to have a mechanism for individually and uniquely presenting, based on the character and the personality, the user with information regarding the cause and the appropriate treatment (solution) of the unexpected real-machine operation in executing the control program.

Therefore, in the present specification, a mechanism will be proposed that allows the autonomous operation apparatus executing the control program to evaluate the real-machine operation and investigate the cause of the unexpected real-machine operation, thereby involuntarily notifying the user of the cause and the solution.

Furthermore, in the present specification, a mechanism for the autonomous operation apparatus executing the control program to individually and uniquely notify the user of the cause and the solution of the unexpected real-machine operation will also be proposed.

First, a mechanism of adding, to the control program to be developed, information regarding the ideal state at the time of the execution of the control program in the autonomous operation apparatus to be developed is implemented in the development environment of the control program.

In addition, a mechanism is implemented in which, in the execution environment of the control program, the autonomous operation apparatus compares the real machine state based on the detection values and the like of the sensors arranged on the real machine and the ideal state added to the control program at the time of the execution of the control program, and the autonomous operation apparatus evaluates the real-machine operation to specify the candidates for the cause and the solutions of the unexpected real-machine operation.

Furthermore, a mechanism is implemented in which, in the execution environment of the control program, a notification method specified based on attribute information, such as character and personality provided to the robot, stored in association with the autonomous operation apparatus 100 is used to notify the user of the candidates for the cause and the solutions of the unexpected real-machine operation. For example, the robot determines the content of notification to the user (including the method of expressing the cause and the solution, the device to be used for the notification, and the like), the notification timing, the notification frequency, and the like based on the personality of the robot and carries out the notification to the user.

FIG. 9 schematically illustrates a program development environment and an execution environment in which the proposed mechanisms are implemented.

The control program of the autonomous operation apparatus is created as, for example, motion data, which is also called defined operation, including a set of key frames describing a temporal change in each joint angle. In the case of developing the control program by using the development apparatus 200 having the function of the physics engine and the 3D graphics animation, the actual physical phenomenon at the time of the reproduction of the motion data in the real machine of the autonomous operation apparatus can be reproduced in the virtual machine in a physical simulation, and 3D graphics of the operation of the virtual machine that reproduces the motion data can be further displayed.

The developer of the control program (or the motion creator) can check whether or not the virtual machine is in the ideal state through the 3D graphics display on the development apparatus 200 to appropriately correct the data of the key frames and the ideal state and complete the motion data.

Furthermore, the development apparatus 200 performs a physical simulation to generate ideal values of the tilt, the movement speed, the movement direction, and the like of the body of the autonomous operation apparatus (whole body of robot) that reproduces the completed motion data. The development apparatus 200 adds, to the motion data, the ideal values as data indicating the "ideal state" of the autonomous operation apparatus that reproduces the motion data and outputs the data.

Note that the motion data and the data of the ideal state of the motion data may not be integrated into one file, and for example, the data may be provided in individual files associated with each other.

On the real machine of the autonomous operation apparatus 100, the state of the real machine, such as the tilt, the movement speed, and the movement direction of the real machine 100, is acquired based on the detection values of the sensors arranged in each module unit 120 when the motion data is reproduced. To acquire the actual state of the autonomous operation apparatus 100, it is assumed that the autonomous operation apparatus 100 includes a plurality of sensors, such as an encoder, a gyro sensor or IMU (Inertial Measurement unit), and a camera, that detect the rotation angle of each joint. In addition, a technique, such as SLAM (Simultaneous Localization and Mapping) and ToF (Time of Flight), may be applied to acquire the movement distance and the movement direction as the state of the real machine.

On the autonomous operation apparatus 100, a motion evaluation unit 901 compares the actual real machine state acquired from the various sensors at the time of the reproduction of the motion data and the ideal state added to the motion data being reproduced, and the autonomous operation apparatus 100 evaluates the real-machine operation. The motion evaluation unit 901 may be, for example, one of the application programs executed on the processor 111 of the autonomous operation apparatus 100. In addition, a database (hereinafter, also referred to as "motion evaluation knowledge database") 902 storing the difference between the ideal state of the motion data and the actual state acquired from the real machine 100 in association with the cause of the difference and the solution may be provided on the autonomous operation apparatus 100. Furthermore, in a case where the motion evaluation unit 901 determines that the real machine state at the time of the reproduction of the motion data is significantly different from the ideal state so that the real-machine operation is unexpected, the motion evaluation unit 901 refers to the motion evaluation knowledge database 902 to specify a plurality of candidates for the cause and solutions. Note that the motion evaluation unit 901 may perform machine learning of the relationship regarding the difference between the ideal state of the motion data and the actual state of the real machine 100.

In addition, on the autonomous operation apparatus 100, a user notification unit 903 notifies the user of the candidates and the solutions of the cause of the unexpected real-machine operation that are specified as a result of taking into account the attribute information stored in association with the autonomous operation apparatus 100. The user notification unit 903 includes a notification content generation unit 904 and a notification timing control unit 905. The user notification unit 903 may be, for example, one of the application programs executed on the autonomous operation apparatus 100 (may be the same application program as the motion evaluation unit 901 or may be a different application program).

The attribute information stored in association with the autonomous operation apparatus 100 includes, for example, the character and the personality provided to the entertainment robot as the autonomous operation apparatus 100. In addition, the attribute information is not limited to only static or fixed information, such as the character, the personality, and the nature, and the attribute information may further include the internal state or affection, such as instinct and emotion, that changes from moment to moment. The attribute information stored in association with the autonomous operation apparatus 100 is stored in, for example, the memory 112 in the body unit 110.

The notification content generation unit 904 takes into account the attribute information, such as character and personality, stored in association with the autonomous operation apparatus 100 to generate the content for the notification of the plurality of candidates for the cause and the solutions of the unexpected real-machine operation of the motion data. For example, for hard-working or methodical characteristic, the content of notification includes a larger number of candidates for the cause and solutions. For work-shy or lazy characteristic, the content of notification includes only a small number of candidates for the cause and solutions. In addition, in a case where a notification method of voice message (speech) is to be used, the notification content generation unit 904 may generate a voice message with use of words based on the character, the personality, and the nature associated with the autonomous operation apparatus 100.

Note that for a modification, the notification content generation unit 904 may take into account the state of the user receiving the notification (such as busy and free) and the ambient environment (such as inside the house and outdoors) to thereby change the content, the timing, and the frequency of the notification to the user.

Furthermore, the notification timing control unit 905 takes into account the attribute information, such as the character and the personality, stored in association with the autonomous operation apparatus 100 to control the timing of the notification with the content generated by the notification content generation unit 904. For example, the notification is performed at a high frequency for hard-working or methodical characteristic, and the notification is performed at a low frequency for work-shy or lazy characteristic.

According to the program development environment and execution environment illustrated in FIG. 9, the autonomous operation apparatus 100 that reproduces the motion data can individually and uniquely notify the user of the cause and the solution of the unexpected real-machine operation as illustrated below.

- When the robot does not walk smoothly due to a glossy floor, the robot tells the user that "the floor is slippery."
- When the robot raises a heavy thing, the robot tells the user to "hold the back to prevent falling."

By adding the data of the "ideal state" indicating the movement of the entire body to the motion data defining the operation of each joint portion and the like of the autonomous operation apparatus 100, the user can easily figure out the unexpected operation and the cause of the unexpected operation of the real machine that are hard to recognize from a local viewpoint of only viewing the movement of each joint. The following is an example of the relationship between the unexpected real-machine operation different from the ideal state and the cause of the unexpected real-machine operation.

**[Table 1]**

| Unexpected Real-Machine Operation | Cause |
|---|---|
| The machine cannot advance as expected (movement distance) due to the slippery floor. | The movement of the joints is ideal, but the friction of the floor is different. |
| The machine is carrying an | The machine is tilted forward, |
| item and cannot advance as expected (movement distance). | and the stride is short (joints do not open). |
| The machine is sunk into the soft ground and cannot advance as expected (movement distance). | The stride cannot be increased due to sinking (joints are as expected). |
| The machine is equipped with an accessory (such as socks) and cannot advance as expected (movement distance). | The movement of the joints is ideal, but the friction of the floor is different. |
| The machine is carrying an item and cannot go up the stairs. | The machine is tilted forward, and the stride is short (joints do not open). |
| The floor is tilted, and the machine cannot roll over. | The movement of the joints is as expected, but the shift in the center of gravity does not exceed the threshold. |

Furthermore, in the case where the operation of the autonomous operation apparatus 100 is unexpected, the autonomous operation apparatus 100 notifies the user of the cause and the solution of the unexpected real-machine operation with the content of notification and notification timing in which the attribute information, such as character and personality, stored in associated with the autonomous operation apparatus 100 is taken into account. Therefore, the user and the autonomous operation apparatus 100 communicate with each other, and the user can have an attachment to the autonomous operation apparatus 100. In addition, the cause of the unexpected real-machine operation can be recognized from the viewpoint of the overall behavior of the autonomous operation apparatus 100. This allows feedback control of the entire real machine instead of feedback control for a local area, such as for each joint, and autonomous operation of the autonomous operation apparatus 100 can be realized.

### C-1. Details of Program Development Environment

The development apparatus used to develop the program has the function of the physics engine and the 3D graphics animation. Therefore, the actual physical phenomenon at the time of the reproduction of the motion data by the real machine of the autonomous operation apparatus can be reproduced by the virtual machine through the physical simulation, and the 3D graphics of the operation of the virtual machine that reproduces the motion data can be further displayed.

Furthermore, the developer of the control program (or the motion creator) can appropriately correct the data of the key frames and the ideal state on the development apparatus 200 while checking whether or not the virtual machine is in the ideal state through the 3D graphics display.

FIG. 10 illustrates a procedure for creating the motion data in the program development environment illustrated in FIG. 9 in a format of a flow chart. The illustrated procedure is executed when the developer of the program uses the development apparatus 200 illustrated in FIG. 1 or FIGS. 3 to 5 to edit the motion.

The developer of the program creates motion data in a key frame format through, for example, the GUI screen for editing the motion data displayed on the display 220 (step S1001). Specifically, the developer of the program inputs, on the GUI screen for editing the motion data, data of the target values to be set in each module unit 120 of the autonomous operation apparatus 100 to be developed (for example, target values of the rotation position, the rotation angle, and the like with respect to the motor as the actuator 121).

Furthermore, the developer of the program instructs the development apparatus 200 to execute the simulation of the motion created by the developer of the program in step S1001 (step S1002). Next, the development apparatus 200 starts the simulation of the motion (step S1003). The development apparatus 200 uses the physics engine to reproduce the real-machine operation of the motion in the virtual machine while taking into account the physical characteristics of the autonomous operation apparatus 100 and the real external environment.

In step S1003, the development apparatus 200 executes the physical simulation to generate, through the physical simulation, ideal values of the tilt, the movement speed, the movement direction, and the like of the body of the autonomous operation apparatus 100 (whole body of robot) that reproduces the motion data while displaying the movement of the autonomous operation apparatus 100 in the 3D graphics, and the development apparatus 200 temporarily holds, in the memory 213, the ideal values as data indicating the "ideal state" of the autonomous operation apparatus that reproduces the motion data (step S1004).

Furthermore, once the execution of the physical simulation of the motion data is finished (step S1005), the development apparatus 200 displays the operation of the virtual machine that reproduces the motion data, that is, the ideal state of the real machine, on the screen of the display 220 (step S1006). Note that see, for example, FIG. 14 (described later) for the screen display.

The developer of the program checks whether or not the ideal state needs to be corrected while viewing the content displayed on the screen (step S1007). Furthermore, when the developer of the program determines that the ideal state needs to be corrected (Yes in Step S1007), the developer of the program corrects the ideal state through the GUI screen for editing the motion data in the display 220 (step S1008). Note that see, for example, FIG. 14 (described later) for the screen display.

Furthermore, the development apparatus 200 outputs, along with the motion data, the data of the ideal state of the created key frames verified through the physical simulation (step S1009). Subsequently, the motion data provided with the ideal state is forwarded to the autonomous operation apparatus 100 and reproduced on the autonomous operation apparatus 100.

FIG. 11 schematically illustrates a functional configuration example of the development apparatus 200 for editing the motion data provided with the ideal state. The illustrated functional configuration is embodied by, for example, starting a predetermined development tool program on a personal computer used as the development apparatus 200. In addition, each functional block in FIG. 11 is implemented as, for example, a software module included in the development tool program.

A motion creation unit 1101 edits the key frame of the autonomous operation apparatus 100 to be controlled. The motion creation unit 1101 presents, for example, a GUI screen for editing the motion data on the display 220 and creates motion data in a key frame format based on the input from the developer of the program on the GUI screen.

The configuration of the screen of the GUI for creating the key frame is arbitrary. The key frame is a set of data designating the target values, such as the position and the speed of the movable portion, at the start, at the end, or the like of the operation in a certain section. For example, the target values of each movable portion of each key frame may be input on the GUI. In addition, a method may also be applied, in which a 3D model of the control target is used to designate the position and the posture of a specific part, such as a head portion and left and right hands and feet, and IK (inverse kinematics) computation is used to create the key frame.

In addition, the motion creation unit 1101 may also use the GUI to receive the input of control parameters of the motor and hardware characteristic values of the motor that drives each movable portion of the autonomous operation apparatus 100 to be controlled and hold the parameters and the values in the memory 213 in a format of "control parameter data set" (for example, see FIG. 8 (described above)). In addition, the motion creation unit 1101 may receive the input of 3D model data describing the real-machine hardware characteristic values of the autonomous operation apparatus 100 to be controlled and hold the data in the memory 213. The configuration of the screen for inputting the control parameters of the motor and the hardware characteristic values of the motor is arbitrary.

A simulation unit 1102 uses the physics engine function included in the development apparatus 200 to compute, based on the laws of physics, the physical phenomenon at the time of the real operation of the autonomous operation apparatus 100 according to the motion data created by the motion creation unit 1101. In the computation, the simulation unit 1102 takes into account the physical characteristics of the autonomous operation apparatus 100 and the real external environment to thereby generate the operation of the entire virtual machine similar to the reality and uses the result to generate the ideal state of the autonomous operation apparatus 100.

For example, in the case where the autonomous operation apparatus 100 is a robot, the simulation unit 1102 uses the physics engine function to take into account the weight and the moment of each link or joint of the arms of the robot and the characteristics of the actuators for driving the joints and the like and calculates, based on the laws of physics, the physical action (such as connection to ground and collision with obstacle) of the virtual physical environment and the virtual robot expressed on the development tool program in the case were the virtual robot modeled after the robot operates according to the motion data. In this way, the simulation unit 1102 calculates the operation of the entire virtual machine as if the actuators of the robot are actually driven and generates the ideal state of the robot, such as the tilt, the movement distance, and the movement direction of the body.

Note that in the case where the "control parameter data set," such as the control parameters of the motor and the hardware characteristic values of the motor, is used in the simulation, the simulation unit 1102 includes a motor control output unit 1111 and a physical computation unit 1112.

The motor control output unit 1111 inputs, to the physical computation unit 1112, the target value (joint angle) of the motor as motion data created by the motion creation unit 1101. The motor control output unit 1111 receives the changed current value of the motor as a computation result from the physical computation unit 1112 and obtains a deviation between the target value and the current value. Furthermore, the motor control output unit 1111 adds P control input, I control input, and D control input based on a proportional gain K_{P}, an integral grain K_{I}, and a differential gain K_{D}, respectively, to obtain the control input value of the motor and then calculates power or torque as an output value of the motor with respect to the control input value. However, the logic can be changed to logic other than the PID calculation based on the control system of the motor adopted in the real machine of the autonomous operation apparatus 100. Furthermore, if there is a significant value among the mechanical or electrical hardware characteristic values of the motor (described above), the motor control output unit 1111 applies a process, such as correction, to the output value.

The physical computation unit 1112 takes into account the hardware characteristic values, such as the weight, the center of gravity, the inertia, the joint movable range, and the coefficient of friction, of each part, such as an arm and a joint motor, to instruct, through the API, the physics engine to perform calculation corresponding to the physical behavior of the real machine at the time of the drive of the motor based on the output value (power or torque) calculated by the motor control output unit 1111. In addition, the current value of the motor calculated by the physical computation unit 1112 is fed back to the motor control output unit 1111.

The simulation unit 1102 reproduces the operation of the ideal state of the autonomous operation apparatus 100 in the virtual machine based on the simulation result. Furthermore, the display unit 1103 displays, on the display 220, the operation of the virtual machine operating in the 3D graphics animation space.

The developer of the program can check whether or not the ideal state needs to be corrected while viewing the content displayed on the screen. Furthermore, when the developer of the program determines that the ideal state needs to be corrected, the developer of the program corrects the ideal state through the GUI screen for editing the motion data in the display 220.

Furthermore, the output unit 1104 outputs, along with the motion data, the data of the ideal state of the created key frames verified through the physical simulation. Subsequently, the motion data provided with the ideal state is forwarded to the autonomous operation apparatus 100 and reproduced on the autonomous operation apparatus 100.

FIG. 12 schematically illustrates a configuration example of the motion data provided with the ideal state created in the program development environment illustrated in FIG. 9. The motion data includes the key frame and the ideal state.

The key frame includes, for example, values of the parameters of the actuator in chronological order. The parameters of the actuator include angle information of each joint and control parameters of a motor for driving each joint or the like. The former angle information of each joint is written as an array of key frames in chronological order, such as an angle of each joint at each time. In addition, the latter control parameters of the motor are written as an array of PID parameters in chronological order, such as PID parameters to be set in each motor at each time.

On the other hand, the ideal state includes the movement speed, the posture, the movement direction, and the like of the real machine of the autonomous operation apparatus 100 that reproduces the key frame. The movement speed is written as an array of movement speed in chronological order, such as a speed vector of the real machine at each time. In addition, the posture is written as an array of tilts of the real machine in chronological order, such as a rotation angle about each axis of roll, pitch, and yaw of the real machine (or body unit 110) at each time. In addition, the movement direction is written as an array of positions of the real machine in chronological order, such as a position on an xyz space of the real machine at each time.

From the viewpoint of evaluating the motion data, the values held as the ideal state need to be information that can be measured by a sensor or the like during operation of the autonomous operation apparatus 100 (that is, during reproduction of key frame). In addition, the ideal state is ultimately output together with the motion data, such as a key frame, and the time axis of the ideal state needs to match the motion data.

On the other hand, to evaluate the motion data, the autonomous operation apparatus 100 needs to include a sensor for acquiring the state of the real machine to be compared with the values held as the ideal state. Therefore, it is assumed that the autonomous operation apparatus 100 includes a plurality of sensors, such as an encoder, a gyro sensor or IMU, and a camera, that detect the rotation angles of the joints. In addition, a technique, such as SLAM and ToF, may be applied to acquire the movement distance and the movement direction as the state of the real machine.

FIG. 13 illustrates a data configuration example of the ideal state in the case where the autonomous operation apparatus 100 is a robot. In the illustrated example, the ideal state of the robot includes items (state parameters) including the movement distance of the robot, the movement speed, and the posture (tilt) of the body.

The movement distance of the robot in the ideal state can be written in a format including the array of relative distance of the movement of the robot in chronological order, the total relative distance of the movement of the robot, the dispersion of relative distance of the movement of the robot, and the like.

In addition, the movement speed of the robot in the ideal state can be written in a format including the array of movement speed of the robot in chronological order, the average movement speed of the robot, the dispersion of movement speed of the robot, and the like.

In addition, the posture (tilt) of the robot in the ideal state can be written in a format including the array of tilts of the body of the robot in chronological order, the average tilt of the body of the robot, the dispersion of tilt of the body of the robot, and the like.

In all of the items (state parameters), the values of the ideal state include information of the time axis, and the motion data and the time axis can be brought into line with each other. In addition, the values are basically recorded as relative values from the start of the motion.

In addition, the motion data can be used to perform the simulation in the course of creating the motion data in the program development environment illustrated in FIG. 9. In this way, when, for example, it is determined that the ideal state needs to be corrected as a result of checking the ideal state of the autonomous operation apparatus 100 on the display screen as illustrated in FIG. 14, the developer of the program can correct the ideal state through the GUI screen.

FIG. 14 illustrates a configuration example of an input screen for checking and correcting the ideal state. An illustrated input screen 1400 includes a reproduction instruction unit 1410 and an ideal state correction instruction unit 1420.

As described above, the simulation unit 1102 on the development apparatus 200 simulates the autonomous operation apparatus 100 that reproduces the created motion data, and the display unit 1103 displays, on the screen of the display 220, the 3D graphics animation of the virtual machine that reproduces the operation of the ideal state based on the simulation result.

The reproduction instruction unit 1410 includes various buttons for instruction regarding the reproduction operation of the 3D graphics animation of the virtual machine. A reference number 1411 denotes a reproduction button, a reference number 1412 denotes a fast forward button, a reference number 1413 denotes a rewind button, and a reference number 1414 denotes a fast rewind button. In addition, a slider 1416 can be slid on a seek bar indicated by a reference number 1415 to move the reproduction position of the 3D graphics animation of the virtual machine that reproduces the motion data. In addition, reference number 1417 denotes a reproduction position display region indicating the current reproduction position, and the time can be directly written in the region to designate the reproduction position.

The data of each item indicating the ideal state of the autonomous operation apparatus 100 at the reproduction position indicated by the reproduction position display region 1417 is displayed on the ideal state correction instruction unit 1420. In the input screen 1400 illustrated in FIG. 14, it is assumed that the autonomous operation apparatus 100 is a robot, and the ideal state includes items (state parameters) including the movement distance of the robot, the movement speed, and the posture (tilt) of the body.

Fields with an item name "movement distance" display the data of the relative distance of the movement of the robot in the ideal state, the total relative distance, and the dispersion of relative distance at the reproduction position indicated by the reproduction position display region 1417, and the values of the fields can be directly rewritten to correct the data of the ideal state.

Furthermore, fields with an item name "movement speed" display the data of the movement speed of the robot in the ideal state, the average movement speed, and the dispersion of movement speed at the reproduction position indicated by the reproduction position display region 1417, and the values of the fields can be directly rewritten to correct the data of the ideal state.

Furthermore, fields with an item name "posture (tilt)" display data including the tilt of the robot in the ideal state, the average tilt, and the dispersion of tilt at the reproduction position indicated by the reproduction position display region 1417, and the values of the fields can be directly rewritten to correct the data of the ideal state.

Once a "motion output" button indicated by a reference number 1431 on the lower left of the input screen 1400 is selected, the data of the ideal state checked and corrected on the input screen 1400 is output along with the created motion data. In addition, once a "Cancel" button indicated by a reference number 1432 is pointed, the data of the ideal state corrected through the input screen 1400 is canceled.

The development apparatus 200 adds, to the motion data, the data of the items (state parameters) indicating the "ideal state" of the autonomous operation apparatus that reproduces the motion data and outputs the data.

### C-2. Details of Program Execution Environment

In the program execution environment in which the autonomous operation apparatus 100 reproduces the motion data, whether or not the real-machine operation for reproducing the motion data is as expected (that is, whether or not the state is the ideal state) is evaluated, and in the case where the real-machine operation is unexpected, the user is notified of the cause and the solution of the unexpected operation.

### C-2-1. Evaluation of Motion Data

On the real machine of the autonomous operation apparatus 100, the state of the real machine, such as the tilt, the movement speed, and the movement direction of the real machine 100, is acquired at the reproduction of the motion data based on the detection values of the sensors arranged on the module units 120. It is assumed that the autonomous operation apparatus 100 includes a plurality of sensors, such as an encoder, a gyro sensor or IMU, and a camera, that detect the rotation angles of the joints in order to acquire the actual state of the autonomous operation apparatus 100. In addition, a technique, such as SLAM and ToF, may be applied to acquire the movement distance and the movement direction as the state of the real machine.

As illustrated in FIG. 9, the motion evaluation unit 901 on the autonomous operation apparatus 100 compares the actual real machine state acquired from the various sensors at the reproduction of the motion data and the ideal state added to the motion data, and the autonomous operation apparatus evaluates the real-machine operation. Furthermore, in the case where the motion evaluation unit 901 determines that the real machine state at the reproduction of the motion data is significantly different from the ideal state so that the real-machine operation is unexpected, the motion evaluation unit 901 refers to the motion evaluation knowledge database 902 to specify a plurality of candidates for the cause and the solutions.

FIG. 15 illustrates, in a format of a flow chart, a procedure for evaluating the motion data in the program execution environment illustrated in FIG. 9. The illustrated procedure is basically carried out in parallel with the reproduction of the motion data on the real machine of the autonomous operation apparatus 100.

Once the reproduction of the motion data is started on the real machine of the autonomous operation apparatus 100 (step S1501), the evaluation of the motion is executed at certain intervals.

On the real machine of the autonomous operation apparatus 100, the state of the real machine corresponding to the items of the ideal state, such as the tilt, the movement speed, and the movement direction of the real machine 100, is acquired at the reproduction of the motion data based on the detection values of the sensors arranged on the module units 120 (step S1502).

The autonomous operation apparatus 100 acquires the output of the plurality of sensors, such as an encoder, a gyro sensor or IMU, and a camera, that detect the rotation angles of the joints to acquire the state of the real-machine operation. In addition, a technique, such as SLAM and ToF may be applied to acquire the movement distance and the movement direction as the state of the real machine.

The motion evaluation unit 901 compares the actual real machine state acquired from the various sensors at the reproduction of the motion data and the ideal state added to the motion data, and the autonomous operation apparatus evaluates the real-machine operation (step S1503).

Furthermore, in the case where the motion evaluation unit 901 determines that the real machine state at the reproduction of the motion data is significantly different from the real state so that the real-machine operation is unexpected, the motion evaluation unit 901 refers to the motion evaluation knowledge database 902 to specify a plurality of candidates for the cause and the solutions (step S1504). The data of the specified candidates for the cause and the solutions are temporarily held in the memory 112 of the body unit 110.

If the reproduction of the motion data to be evaluated is not finished on the real machine of the autonomous operation apparatus 100 (No in step S1505), processing steps S1502 to S1504 are repeatedly executed.

Once the reproduction of the motion data is finished on the real machine of the autonomous operation apparatus 100 (Yes in step S1505), the evaluation of the motion data ends. The data of the candidates for the cause and the solutions of the unexpected operation of the real machine temporarily held in the memory 112 or the like of the body unit 110 is output from the motion evaluation unit 901 to the user notification unit 903. The user notification unit 903 uses the data input from the motion evaluation unit 901 to generate the content of the notification to the user (described later).

FIG. 16 illustrates a configuration example of data describing a correspondence between the unexpected operations of the real machine and the candidates for the causes stored in the motion evaluation knowledge database 902. In the illustrated example, the motion evaluation knowledge database 902 holds a table including, for each item (state parameter) to be compared with the ideal state, the difference from the ideal state (guide word), such as magnitude of value and direction, and one or more candidates for the cause of the difference. Here, the content of the table is based on the assumption that the autonomous operation apparatus 100 is a movement apparatus that moves on the floor (for example, legged robot, carrier, or the like).

There may be two or more candidates for the cause in relation to each state parameter when the state of the real machine reproducing the motion data is different from the ideal state. Examples of the candidates for the cause that the movement distance of the real machine reproducing the motion data is larger than the ideal state include two examples including "Floor is sloped" and "Friction of floor is different" with respect to the work environment expected in the ideal state (or at the creation of the motion data). In addition, examples of the candidates for the cause that the movement distance of the real machine reproducing the motion data is smaller than the ideal state include three examples including "Floor is sloped," "Friction of floor is different," and "(Real machine) is holding a heavy thing." In addition, examples of the candidates for the cause that the movement direction of the real machine reproducing the motion data turns to the right (left) include two examples including "Unevenness of floor" and "Something is attached to (installed on) floor."

In addition, the state of the real machine may be different from the ideal state in two or more state parameters caused by the same candidate for the cause when the motion data is reproduced by the real machine. For example, one candidate for the cause "Floor is sloped" may cause the "movement distance" of the real machine to be larger or smaller than the ideal state and may cause the "tilt in posture" to tilt forward or tilt to the left or right compared to the ideal state.

In the table illustrated in FIG. 16, a cause ID as identification information is provided to each candidate for the cause. Therefore, even in the case where the same candidate for the cause appears across a plurality of state parameters, it can be specified that it is the same candidate for the cause based on the cause ID.

Furthermore, in the table illustrated in FIG. 16, a score is provided to each candidate for the cause in each state parameter. For example, the score is a value indicating the degree of influence on the state parameter influenced by the candidate for the cause when the state of the real machine that reproduces the motion data is different from the ideal state. Specifically, in a case where it is considered that the effect of "Floor is sloped" is greater than the effect of "Friction of floor is different" when the "movement distance" of the real machine that reproduces the motion data is larger than the ideal state, a high score value of 0.9 is provided to the candidate for the cause "Floor is sloped," and a low score value of 0.1 is provided to the candidate for the cause "Friction of floor is different."

Furthermore, in the table illustrated in FIG. 16, the provided score varies in each state parameter and varies based on the difference from the ideal state in the state parameter, even for the same candidate for the cause. This is because the degree of influence of the candidate for the cause varies based on the state parameter. For example, the degrees of influence on the state parameters "movement distance" and "tilt in posture" influenced by the candidate for the cause "Floor is sloped" vary, and different score values are provided. In addition, the degree of influence of the candidate for the cause "Floor is sloped" is high when the "movement distance" is larger than the ideal state, and a high score value of 0.9 is provided. The degree of influence is low when the "movement distance" is smaller than the ideal state, and a low score value of 0.2 is provided.

The score of each candidate for the cause is preset as a value based on the result of physical simulation or the verification of real machine. For a modification, the score of each candidate for the cause may be changed based on the characteristics (including individual differences) of the autonomous operation apparatus 100 or the purpose of the action or the like. For example, for a robot that needs to walk straight (or in execution of an action plan in which it is important that the robot walk straight), the score of each state parameter of each candidate for the cause is set, or the setting is changed, in view of this. Note that instead of the score, a priority allocated to each candidate for the cause in each state parameter may be held in the table. Regardless of whether the table has a format of score or priority, the table is used for the evaluation of the motion data and the generation of the content of notification described later. Separate tables may be provided on the basis of motion data. Alternatively, a plurality of pieces of motion data may be grouped (according to the purpose or the like) to provide tables on the basis of the groups, and the tables may be held in the motion evaluation knowledge database 902.

During the reproduction of the motion data on the real machine of the autonomous operation apparatus 100, the motion evaluation unit 901 compares the actual real machine state acquired from various sensors and the like provided in the real machine and the ideal state added to the motion data being reproduced, and the autonomous operation apparatus 100 evaluates the real-machine operation. Furthermore, the motion evaluation unit 901 refers to the table held in the motion evaluation knowledge database 902 (see FIG. 16) to specify and hold the cause ID and the score of the candidate for the cause, for the state parameter in which the state of the real machine is different from the ideal state.

For example, when a difference indicating that the "movement distance" of the real machine is "larger" than the ideal state is observed in a reproduction section of the motion data, the motion evaluation unit 901 holds a score value of 0.9 for the candidate for the cause "Floor is sloped" and holds a score value of 0.1 for the candidate for the cause "Friction of floor is different" in the reproduction section. In addition, when a difference indicating that the "tilt in posture" of the real machine is "tilted forward" with respect to the ideal state is observed in the same reproduction section, the motion evaluation unit 901 holds a score value of 0.8 for the candidate for the cause "Floor is sloped" and holds a score value of 0.2 for the candidate for the cause "Holding heavy thing" in the same reproduction section. In addition, when a difference indicating that the "movement distance" of the real machine is "smaller" than the ideal state is observed in another reproduction section, the motion evaluation unit 901 holds a score value of 0.2 for the candidate for the cause "Floor is sloped," holds a score value of 0.6 for the candidate for the cause "Friction of floor is different," and holds a score value of 0.2 for the candidate for the cause "Holding heavy thing" in the other reproduction section.

Furthermore, once the reproduction of the motion data is finished on the real machine, the motion evaluation unit 901 obtains the total scores in chronological order for each cause ID and generates final motion evaluation. The score is used to generate the content of notification described later.

FIG. 17 illustrates a list of candidates for the cause obtained by the motion evaluation unit 901 in the motion evaluation. The candidate for the cause with a high total score is identified as the cause of the unexpected real-machine operation. In the illustrated example, the candidates for the cause and the cause IDs are listed up in descending order of the total value of score. The information as in the list is held in, for example, the memory 112 of the body unit 110. The notification content generation unit 904 in a later stage reads the held information from the memory 112 and uses the information to generate the content of notification to the user.

### C-2-2. Process of Notification to User

Once the user notification unit 903 receives the result of the motion evaluation of the motion evaluation unit 901, the user notification unit 903 takes into account the attribute information stored in association with the autonomous operation apparatus 100 and notifies the user of the candidates for the cause and the solutions of the unexpected real-machine operation. The user notification unit 903 includes the notification content generation unit 904 and the notification timing control unit 905.

The attribute information stored in association with the autonomous operation apparatus 100 includes, for example, the character and the personality provided to the entertainment robot as the autonomous operation apparatus 100. In addition, the attribute information is not limited to only static or fixed information, such as the character, the personality, and the nature, and the attribute information may further include the internal state or affection, such as instinct and emotion, that changes from moment to moment. The attribute information stored in association with the autonomous operation apparatus 100 is stored in, for example, the memory 112 in the body unit 110. In addition, for a modification, the attribute information may include the state of the user receiving the notification (such as busy and free) or the ambient environment (such as inside the house and outdoors). The state of the user and the ambient temperature can be recognized based on, for example, a captured image of a camera or a state of conversion with the user.

The notification content generation unit 904 takes into account the attribute information, such as character and personality, stored in association with the autonomous operation apparatus 100 to select the number, the type, the timing of notification, and the frequency of notification of the candidates for the cause to be notified among the plurality of candidates for the cause of the unexpected real-machine operation of the motion data.

For example, in a case where a hard-working or methodical characteristic is associated with the autonomous operation apparatus 100, the notification content generation unit 904 selects to notify the user of all of the possible candidates for the cause at a certain interval. Furthermore, in a case where an impatient characteristic is associated with the autonomous operation apparatus 100, the notification content generation unit 904 selects the candidate for the cause with the highest score (or priority) and determines to notify at a high frequency. Furthermore, in a case where a rough characteristic or a work-shy or lazy characteristic is associated with the autonomous operation apparatus 100, the notification content generation unit 904 determines to notify, just once, the user of only one candidate for the cause randomly selected regardless of the score or the priority. In this way, the character and the personality of the autonomous operation apparatus 100 can be expressed based on the notification of the candidate for the cause to the user. In addition, by personally presenting the cause of the unexpected real-machine operation to the user, the autonomous operation apparatus 100 and the user communicate with each other, and the user can have an attachment to the autonomous operation apparatus 100.

In addition, for a modification, the notification content generation unit 904 may take into account the state of the user receiving the notification (such as busy and free) and the ambient environment (such as inside the house and outdoors) to thereby change the content, the timing, and the frequency of the notification to the user. For example, when the user is busy or outdoors, the notification content generation unit 904 determines to notify, just once, the user of only one candidate for the cause randomly selected regardless of the score or the priority to prevent disturbing the user or annoying those in the surroundings. In addition, when the user is inside of the house and free, the notification content generation unit 904 determines to notify the user of all of the possible candidates for the cause at certain intervals or to notify, at a high frequency, a plurality of candidates for the cause with high scores or high priorities.

Furthermore, in the case of using the notification method through a voice message or character information, the notification content generation unit 904 may select a voice message or character information including text data with use of words based on the character, the personality, and the nature associated with the autonomous operation apparatus 100. In this way, the character or the personality of the autonomous operation apparatus 100 can be expressed based on the content of notification of the candidate for the cause to the user. In addition, by personally presenting the cause of the unexpected real-machine operation to the user, the autonomous operation apparatus 100 and the user communicate with each other, and the user can have an attachment to the autonomous operation apparatus 100.

Furthermore, the notification timing control unit 905 controls the notification to the user according to the timing of the notification content generation unit 904 selecting the candidates for the cause selected by the notification content generation unit 904 by taking into account the attribute information stored in association with the autonomous operation apparatus 100.

FIG. 18 illustrates, in a format of a flow chart, a procedure for the user notification unit 903 to notify that the real-machine operation of the autonomous operation apparatus 100 is unexpected based on the evaluation result of the motion evaluation unit 901 in the program execution environment illustrated in FIG. 9. The illustrated procedure is executed at a predetermined interval during the reproduction of the motion data on the real machine of the autonomous operation apparatus 100 or is executed at an arbitrary trigger (for example, at the completion of the reproduction of the motion data).

The notification content generation unit 904 acquires the list of the candidates for the cause (for example, see FIG. 17) listed in descending order of the score from, for example, the memory 112 of the body unit 110 and starts the generation process of the content of notification (step S1801).

The notification content generation unit 904 accesses the memory 112 at, for example, a certain interval or an arbitrary trigger (for example, at the completion of the reproduction of the motion data) during the reproduction of the motion data on the real machine of the autonomous operation apparatus 100 and tries to acquire the list of the candidates for the cause. If there is no list of the candidates for the cause, the present process ends.

In a case where there is a list of the candidates for the cause, the notification content generation unit 904 takes into account the attribute information, such as character and personality, stored in association with the autonomous operation apparatus 100 and selects the number, the type, the timing of notification, and the frequency of notification of the candidates for the cause to be notified among the plurality of candidates for the cause of the unexpected real-machine operation of the motion data (step S1802).

Next, the notification content generation unit 904 acquires, from the motion evaluation knowledge database 902, the content of notification to the user regarding the candidate for the cause selected in step S1802 (step S1803).

Furthermore, the notification timing control unit 905 notifies the user of the content of notification acquired from the motion evaluation knowledge database 902 according to the notification timing and the notification frequency selected by the notification content generation unit 904 (step S1804).

FIG. 19 illustrates a configuration example of the data describing the content of notification regarding each candidate for the cause stored in the motion evaluation knowledge database 902. In the illustrated example, the motion evaluation knowledge database 902 holds a table of the content of notification regarding each candidate for the cause indexed by the cause ID. The number of entries included in the table corresponds to the number of candidates for the cause to be reported to the user. In the illustrated example, the content of notification includes content for prompting the user to assist, such as "The floor is tilted, and I could walk fast," "The floor is slippery, and I can't walk well," "It's heavy, and it takes time to walk," "XXX is stuck, and I cannot spread my legs," "The floor is uneven, and I'm turning to the right," and "I don't know why, but I can't walk well," and the assistance by the user allows to realize the solution that cannot be conducted by the autonomous operation apparatus 100 alone.

For example, in a case where the motion evaluation unit 901 evaluates the motion data to obtain the list of candidates for the cause as illustrated in FIG. 17, the notification content generation unit 904 can acquire the content of notification regarding each of the listed candidates for the cause from the table held in the motion evaluation knowledge database 902 (see FIG. 19) and determine the content of notification as illustrated in FIG. 20.

Note that the table illustrated in FIG. 19 is based on the assumption that the user notification unit 903 uses the notification method through a voice message or character information. In a case of switching the use of words based on the character, the personality, and the nature associated with the autonomous operation apparatus 100, a table may be prepared for each type of character, personality, and nature that can be expected, and the table may be held in the motion evaluation knowledge database 902.

In addition, the user notification unit 903 can also use various modalities other than the speech, such as screen display and gesture, to notify the user. The user notification unit 903 can use one of or a combination of two or more of a plurality of modalities included in the automatic operation apparatus 100 to notify the user of the candidates for the cause of the unexpected real-machine operation.

The notification content generation unit 904 may also select the modality to be used for the notification to the user based on the attribute information, such as character and personality, stored in association with the autonomous operation apparatus 100, the state of the user receiving the notification (such as busy and free), and the ambient environment (such as inside the house and outdoors).

According to the notification process of the user, the cause that the operation of the real machine reproducing the motion data is departed from the ideal state expected at the creation of the motion data can be individually and uniquely reported to the user.

### D. Conclusion

According to the technique disclosed in the present specification, the following matters can be realized.
(1) The ideal state of the autonomous operation apparatus 100 that reproduces the motion data can be created through the simulation and added to the motion data. For example, in the case where the autonomous operation apparatus 100 is a robot, the motion data includes data, such as key frames, indicating temporal changes of the joint angles, and the ideal state includes ideal values of the tilt of the entire robot, the movement speed, the movement direction, and the like.
(2) The developer of the program (the creator of the motion data) can check the ideal state of the autonomous operation apparatus 100 on the simulation screen and appropriately correct the ideal state as necessary.
(3) When the autonomous operation apparatus 100 reproduces the motion data provided with the ideal state, the autonomous operation apparatus 100 can sense the state of the real machine (such as the tilt of the whole body, the movement speed, and the movement direction) to evaluate the difference from the ideal state. That is, the autonomous operation apparatus 100 can detect that the operation at the reproduction of the motion data is departed from the intension of the creator of the motion data.
(4) The autonomous operation apparatus 100 includes the knowledge database storing the difference between the ideal state and the actual state in association with the cause. Furthermore, when the real-machine operation is in an unexpected state departed from the ideal state, the autonomous operation apparatus 100 can specify a plurality of candidates for the cause and the solutions from the knowledge database and notify the user of the candidates for the cause and the solutions. The real-machine operation can be compared with the ideal state to specify not only the behavior from a local viewpoint, such as the actuator of each joint, but can also specify the difference in behavior and the cause from the viewpoint of the entire system. Therefore, the feedback control of the entire system can be performed, and high-level autonomous operation of the autonomous operation apparatus 100 can be realized.
(5) The autonomous operation apparatus 100 can take into account the attribute information, such as character and personality, stored in association with the autonomous operation apparatus 100 to determine the content of notification to the user, the notification timing, and the notification frequency from the plurality of candidates for the cause and notify the user of the content.
(6) The autonomous operation apparatus 100 can notify the user of the unexpected real-machine operation with the content of notification prompting the user to assist, and the assistance by the user can realize the solution that cannot be conducted by the autonomous operation apparatus 100 alone. In addition, the character and the personality of the autonomous operation apparatus 100 can be expressed based on the content of notification of the candidate for the cause to the user. In addition, by personally presenting the cause of the unexpected real-machine operation to the user, the autonomous operation apparatus 100 and the user communicate with each other, and the user can have an attachment to the autonomous operation apparatus 100.

### [Industrial Applicability]

The technique disclosed in the present specification has been described in detail with reference to the specific embodiment. However, it is apparent that those skilled in the art can correct or exchange the embodiment without departing from the scope of the technique disclosed in the present specification.

The technique disclosed in the present specification can be used to develop an application program for realizing an autonomous or adaptive action of the autonomous operation apparatus, such as a robot, a self-driving car, and an unmanned aerial vehicle (drone). In addition, the technique disclosed in the present specification can also be applied to AI development of a character of a video game in which an action plan is used to control the operation.

In short, an exemplary mode has been illustrated to describe the technique disclosed in the present specification, and the content of the description of the present specification should not be interpreted restrictively. The claims should be taken into account to determine the scope of the technique disclosed in the present specification.

Note that the technique disclosed in the present specification can also be configured as follows.
(1) An information processing apparatus that processes a control program of an apparatus to be controlled including a movable portion, the information processing apparatus including:
   a computation unit that computes an operation of the apparatus to be controlled according to the control program including a command value of each time period regarding the movable portion; and
   a holding unit that holds an ideal state of the apparatus to be controlled that operates according to the control program obtained as a computation result of the computation unit, in which
   the control program is output after adding the ideal state to the control program.
(2) The information processing apparatus according to (1), in which
   the computation unit computes physical behavior of the apparatus to be controlled according to the control program.
(3) The information processing apparatus according to any one of (1) and (2), further including:
   a display unit that causes a display apparatus to display the apparatus to be controlled in the ideal state of each time period.
(4) The information processing apparatus according to any one of (1) to (3), in which
   the ideal state includes a plurality of state parameters indicating a state of the apparatus to be controlled,
   the information processing apparatus further includes an input unit that receives an instruction for changing each state parameter in the ideal state of each time period, and
   the control program is output after adding, to the control program, the ideal state after correction of the state parameters according to the instruction received by the input unit.
(5) The information processing apparatus according to any one of (1) to (4), in which
   the apparatus to be controlled is a movement apparatus that moves on a floor, and
   the ideal state of the movement apparatus includes at least one of the state parameters including a posture or a tilt, a movement direction, a movement distance, or a movement speed of a body of the movement apparatus.
(6) An information processing apparatus that controls an apparatus to be controlled including a movable portion according to a control program, the information processing apparatus including:
   a state acquisition unit that acquires a state of the apparatus to be controlled that operates according to a command value of each time period regarding the movable portion included in the control program; and
   an evaluation unit that compares an actual state of the apparatus to be controlled acquired by the state acquisition unit with an ideal state added to the control program to evaluate the operation of the apparatus to be controlled or to evaluate the control program.
(7) The information processing apparatus according to (6), in which
   the evaluation unit specifies a cause of a difference between the actual state of the apparatus to be controlled and the ideal state.
(8) The information processing apparatus according to (7), in which
   the ideal state includes a plurality of state parameters indicating a state of the apparatus to be controlled,
   the state acquisition unit acquires the state of the apparatus to be controlled regarding each state parameter, and
   the evaluation unit specifies the cause of the difference based on a result of the comparison of the actual state of the apparatus to be controlled and the ideal state regarding each state parameter.
(9) The information processing apparatus according to (8), in which
   the apparatus to be controlled is a movement apparatus that moves on a floor, and
   the state parameters include at least one of a posture or a tilt, a movement direction, a movement distance, or a movement speed of a body of the movement apparatus.
(10) The information processing apparatus according to any one of (8) and (9), further including:
   a database that stores the difference between the actual state of the apparatus to be controlled and the ideal state regarding each state parameter in association with the cause of the difference, in which
   the evaluation unit refers to the database to specify the cause of the difference between the actual state of the apparatus to be controlled and the ideal state.
(11) The information processing apparatus according to any one of (6) to (10), further including:
   a notification unit that notifies a user of an evaluation result of the evaluation unit.
(12) The information processing apparatus according to (11), in which
   the notification unit notifies the user of the cause of the difference between the actual state of the apparatus to be controlled and the ideal state.
(13) The information processing apparatus according to (12), further including
   a database that stores the cause of the difference between the actual state of the apparatus to be controlled and the ideal state in association with content of notification to the user, in which
   the notification unit refers to the database and uses the content of notification associated with the cause specified by the evaluation unit to notify the user of the cause of the difference.
(14) The information processing apparatus according to any one of (11) to (13), in which
   the notification unit controls a method of notifying the user based on attribute information associated with the apparatus to be controlled.
(15) The information processing apparatus according to any one of (11) to (14), in which
   the notification unit controls at least one of the content of notification to the user, notification timing, or a notification frequency based on the attribute information associated with the apparatus to be controlled.
(16) The information processing apparatus according to any one of (11) to (15), in which
   the notification unit includes a plurality of modalities and selects a modality to be used for the notification to the user based on the attribute information associated with the apparatus to be controlled.
(17) The information processing apparatus according to any one of (14) to (16), in which
   the attribute information associated with the apparatus to be controlled includes at least one of character, personality, nature, internal state or emotion, state of user, or ambient environment associated with the apparatus to be controlled.
(18) An information processing method of controlling an apparatus to be controlled including a movable portion according to a control program, the information processing method including:
   a state acquisition step of acquiring a state of the apparatus to be controlled that operates according to a command value of each time period regarding the movable portion included in the control program; and
   an evaluation step of comparing an actual state of the apparatus to be controlled acquired in the state acquisition step with an ideal state added to the control program to evaluate the operation of the apparatus to be controlled or to evaluate the control program.
(19) A computer program described in a computer-readable format to execute, on a computer, a process for controlling an apparatus to be controlled including a movable portion according to a control program, the computer program causing the computer to function as:
   a state acquisition unit that acquires a state of the apparatus to be controlled that operates according to a command value of each time period regarding the movable portion included in the control program; and
   an evaluation unit that compares an actual state of the apparatus to be controlled acquired by the state acquisition unit with an ideal state added to the control program to evaluate the operation of the apparatus to be controlled or to evaluate the control program.
(20) A program manufacturing method of manufacturing a control program of an apparatus to be controlled including a movable portion, the program manufacturing method including:
   a computation step of computing an operation of the apparatus to be controlled according to the control program including a command value of each time period regarding the movable portion; and
   a holding step of holding an ideal state of the apparatus to be controlled that operates according to the control program obtained as a computation result of the computation step, in which
   the control program is output after adding the ideal state to the control program.
(21) An information processing method of processing a control program of an apparatus to be controlled including a movable portion, the information processing method including:
   a computation step of computing an operation of the apparatus to be controlled according to the control program including a command value of each time period regarding the movable portion;
   a holding step of holding an ideal state of the apparatus to be controlled that operates according to the control program obtained as a computation result of the computation unit; and
   a step of outputting the control program after adding the ideal state to the control program.
(22) A computer program described in a computer-readable format to execute, on a computer, a process of a control program of an apparatus to be controlled including a movable portion, the computer program causing the computer to function as:
   a computation unit that computes an operation of the apparatus to be controlled according to the control program including a command value of each time period regarding the movable portion;
   a holding unit that holds an ideal state of the apparatus to be controlled that operates according to the control program obtained as a computation result of the computation unit; and
   an output unit that outputs the control program after adding the ideal state to the control program.

### [Reference Signs List]

100 ··· Autonomous operation apparatus (real machine), 110 ··· Body unit
111 ··· Processor, 112 ··· Memory, 113 ··· Communication modem
114 ··· Battery, 115 ··· USB port, 116 ··· GPS
120 ··· Module unit
121 ··· Actuator, 122 ··· Sensor
123 ··· Processor, 124 ··· Memory, 125 ··· Communication modem
200 ··· Development apparatus, 210 ··· Computer body unit
211 ··· Processor, 212 ··· GPU
213 ··· Memory, 214 ··· USB port, 215 ··· Communication modem
220 ··· Display, 230 ··· User interface (UI) unit
901 ··· Motion evaluation unit
902 ··· Motion evaluation knowledge database, 903 ··· User notification unit
904 ··· Notification content generation unit, 905 ··· Notification timing control unit
1101 ··· Motion creation unit, 1102 ··· Simulation unit
1103 ··· Display unit, 1104 ··· Output unit
1111 ··· Motor control output unit, 1112 ··· Physical computation unit.

## Claims

1. An information processing apparatus that processes a control program of an apparatus to be controlled including a movable portion, the information processing apparatus comprising:
a computation unit that computes an operation of the apparatus to be controlled according to the control program including a command value of each time period regarding the movable portion; and
a holding unit that holds an ideal state of the apparatus to be controlled that operates according to the control program obtained as a computation result of the computation unit, wherein
the control program is output after adding the ideal state to the control program.

2. The information processing apparatus according to claim 1, wherein
the computation unit computes physical behavior of the apparatus to be controlled according to the control program.

3. The information processing apparatus according to claim 1, further comprising:
a display unit that causes a display apparatus to display the apparatus to be controlled in the ideal state of each time period.

4. The information processing apparatus according to claim 1, wherein
the ideal state includes a plurality of state parameters indicating a state of the apparatus to be controlled,
the information processing apparatus further includes an input unit that receives an instruction for changing each state parameter in the ideal state of each time period, and
the control program is output after adding, to the control program, the ideal state after correction of the state parameters according to the instruction received by the input unit.

5. The information processing apparatus according to claim 1, wherein
the apparatus to be controlled is a movement apparatus that moves on a floor, and
the ideal state of the movement apparatus includes at least one of the state parameters including a posture or a tilt, a movement direction, a movement distance, or a movement speed of a body of the movement apparatus.

6. An information processing apparatus that controls an apparatus to be controlled including a movable portion according to a control program, the information processing apparatus comprising:
a state acquisition unit that acquires a state of the apparatus to be controlled that operates according to a command value of each time period regarding the movable portion included in the control program; and
an evaluation unit that compares an actual state of the apparatus to be controlled acquired by the state acquisition unit with an ideal state added to the control program to evaluate the operation of the apparatus to be controlled or to evaluate the control program.

7. The information processing apparatus according to claim 6, wherein
the evaluation unit specifies a cause of a difference between the actual state of the apparatus to be controlled and the ideal state.

8. The information processing apparatus according to claim 7, wherein
the ideal state includes a plurality of state parameters indicating a state of the apparatus to be controlled,
the state acquisition unit acquires the state of the apparatus to be controlled regarding each state parameter, and
the evaluation unit specifies the cause of the difference based on a result of the comparison of the actual state of the apparatus to be controlled and the ideal state regarding each state parameter.

9. The information processing apparatus according to claim 8, wherein
the apparatus to be controlled is a movement apparatus that moves on a floor, and
the state parameters include at least one of a posture or a tilt, a movement direction, a movement distance, or a movement speed of a body of the movement apparatus.

10. The information processing apparatus according to any one of claims 8 or 9, further comprising:
a database that stores the difference between the actual state of the apparatus to be controlled and the ideal state regarding each state parameter in association with the cause of the difference, wherein
the evaluation unit refers to the database to specify the cause of the difference between the actual state of the apparatus to be controlled and the ideal state.

11. The information processing apparatus according to claim 6, further comprising:
a notification unit that notifies a user of an evaluation result of the evaluation unit.

12. The information processing apparatus according to claim 11, wherein
the notification unit notifies the user of a cause of a difference between the actual state of the apparatus to be controlled and the ideal state.

13. The information processing apparatus according to claim 12, further comprising:
a database that stores the cause of the difference between the actual state of the apparatus to be controlled and the ideal state in association with content of notification to the user, wherein
the notification unit refers to the database and uses the content of notification associated with the cause specified by the evaluation unit to notify the user of the cause of the difference.

14. The information processing apparatus according to claim 11, wherein
the notification unit controls a method of notifying the user based on attribute information associated with the apparatus to be controlled.

15. The information processing apparatus according to claim 11, wherein
the notification unit controls at least one of the content of notification to the user, notification timing, or a notification frequency based on the attribute information associated with the apparatus to be controlled.

16. The information processing apparatus according to claim 11, in which
the notification unit includes a plurality of modalities and selects a modality to be used for the notification to the user based on the attribute information associated with the apparatus to be controlled.

17. The information processing apparatus according to claim 14, wherein
the attribute information associated with the apparatus to be controlled includes at least one of character, personality, nature, an internal state or an emotion, a state of a user, or ambient environment associated with the apparatus to be controlled.

18. An information processing method of controlling an apparatus to be controlled including a movable portion according to a control program, the information processing method comprising:
a state acquisition step of acquiring a state of the apparatus to be controlled that operates according to a command value of each time period regarding the movable portion included in the control program; and
an evaluation step of comparing an actual state of the apparatus to be controlled acquired in the state acquisition step with an ideal state added to the control program to evaluate the operation of the apparatus to be controlled or to evaluate the control program.

19. A computer program described in a computer-readable format to execute, on a computer, a process for controlling an apparatus to be controlled including a movable portion according to a control program, the computer program causing the computer to function as:
a state acquisition unit that acquires a state of the apparatus to be controlled that operates according to a command value of each time period regarding the movable portion included in the control program; and
an evaluation unit that compares an actual state of the apparatus to be controlled acquired by the state acquisition unit with an ideal state added to the control program to evaluate the operation of the apparatus to be controlled or to evaluate the control program.

20. A program manufacturing method of manufacturing a control program of an apparatus to be controlled including a movable portion, the program manufacturing method comprising:
a computation step of computing an operation of the apparatus to be controlled according to the control program including a command value of each time period regarding the movable portion; and
a holding step of holding an ideal state of the apparatus to be controlled that operates according to the control program obtained as a computation result of the computation step, wherein
the control program is output after adding the ideal state to the control program.
